Europäisches Patentamt

European Patent Office

Office européen des brevets

(19)

(11) Publication number : **0 560 595 A2**

(12) **EUROPEAN PATENT APPLICATION**

(21) Application number : **93301830.1**

(22) Date of filing : **10.03.93**

(51) Int. Cl.$^5$ : **G06F 15/80**

(30) Priority : **13.03.92 GB 9205587**

(43) Date of publication of application :
**15.09.93 Bulletin 93/37**

(84) Designated Contracting States :
**AT BE CH DE DK ES FR GB GR IE IT LI LU NL
PT SE**

(71) Applicant : **Pilkington Micro-Electronics
Limited
Prescot Road St. Helens
Merseyside WA10 3TT (GB)**

(72) Inventor : **Austin, Kenneth
Brockhurst Hall, Brockhurst Way
Northwich, Cheshire (GB)**

(74) Representative : **Driver, Virginia Rozanne et al
Page White & Farrer 54 Doughty Street
London WC1N 2LS (GB)**

(54) **Improved artificial digital neuron, neural network and network traning algorithm.**

(57)   The invention relates to an improved artificial digital neuron, an enhanced artificial neural network architecture together with a reduced training neural network training algorithm. The digital neuron comprises an n bit input one bit output device utilising a random access memory having $2^n$ locations of one bit each. The neuron is programmed by the network training algorithm with the neuron fire state (on or off) in accordance with the synaptic weights allocated to the input code combination pattern for that neuron within the neural network. The digital neuron operates as a look-up table device deriving the neuron firing state, for each n bit digital code pattern applied to its input paths, from the random access memory location identified by the digital code pattern. The synaptic weights allocated to each digital code pattern for a particular neuron in the network cause the neuron to provide as an input correlation function or an interconnect function. The network architecture is based upon digital neurons providing either correlation or interconnection functions allowing a reduced interconnection arrangement where the output of each neuron in the input and hidden layers is connected only to an input path of a corresponding or immediately above or below neuron in the next layer. The training algorithm maps each pattern (as a function or interconnect) into neurons that lie on the path between a positive input (1) and the network output.

FIG.1

EP 0 560 595 A2

The invention relates to so called artificial neural networks and is more particularly concerned with the provision of a novel digital neuron, a simplified neural network architecture and an enhanced neural network training algorithm.

An artificial neural network emulates the action of human neurons in the brain. A human neuron consists of three main parts: the soma, the axon (and its boutons), and the dendrites. The dendrites receive incoming signal pulses from other neurons and transfer these pulses to the soma. The soma "evaluates" all of the signals which it receives from the various dendrites. Some of the signals are positive signals, i.e., they stimulate the soma, while others may be negative, i.e., they act to inhibit stimulation of the soma. To the extent that the soma is stimulated above a predetermined threshold, it generates its own electrical signal pulses and transmits them along the axon to the boutons which are connected to either its dendrites or to the somas of other neurons.

The artificial neurons contained in existing artificial neural networks are designed to mimic the behaviour of human neurons. Each artificial neuron consists of functions similar to those found in human neurons. The process starts with an input value. This input may come from an external source (e.g., a keyboard entry) or from another neuron. As each input travels down its dendrite it is multiplied by a "weight," e.g., +100%, +80% or -90%. These so called synaptic weights are a rough mathematical equivalent of the positive or negative contribution of a human neural electrical pulse to the stimulation of the soma. After all of the inputs reach the soma, they are summed according to their weights, and a resultant net value is produced. This value may require modification in one or more additional summing steps by the soma. The adjusted value is then sent along the axon to other neurons.

A neural network typically comprises three layers of artificial neurons: the input layer, the "hidden" layer and the output layer. The number of input neurons is determined according to the characteristics and number of input data. The number of output neurons is determined the same way. For example, if there are three yes/no questions the answers to which will lead to one of three results then there will be three input neurons (one for each question) and three output neurons (one for each possible result).

The weights are the means by which the network relates the input values to the correct output. In existing neural networks, the system itself assigns and adjusts the weights in order to correctly correlate input and output using a training algorithm.

Before training begins the weights from the input layer to the hidden layer and from the hidden layer to the output layer may be arbitrarily set. Experience has shown that networks learn better when the weights are initially random and non-zero. During training, a set of inputs with a known output, is fed into the network. If the system does not produce the expected output, an error correction is "back-propagated" through the system and all the input/hidden and hidden/output weights are adjusted according to a predetermined formula.

In actual practice, the training process does not input an entire set of training patterns before evaluating the output and then back-propagating to correct errors. Rather, the facts are input one at a time and the output from each fact is examined. If an incorrect output is obtained then the weights are adjusted.

Several hundreds or thousands of facts may be needed to train a neural network. If a system is badly designed or the training facts are inaccurate then there is a good chance that the network will never learn. Therefore, the programmer's skill in choosing the proper number and type of input and output neurons and the trainer's skill in choosing the proper input factors and data to train the network are critical to the successful operation of the system.

The repeated application of the algorithms to the weights makes it difficult for a human to explain the interaction of the weights when the network is trained. Thus, a neural network learns to represent information in terms that it alone can interpret. Its designer uses intellectual creativity in building the structure and rules by which learning can occur and provides the facts from which to learn, but then essentially loses sight of the specific details of operation and becomes a mere observer. The skill in training a neural network is in the selection of the data representations (i.e., the number and type of input, hidden and output neurons) and the selection of the training facts.

It is an object of the present invention to provide a digital neuron which may be fabricated using integrated circuit techniques to form a building block for a neural network.

It is a further object of the invention to integrate a number of digital neurons to provide a neural network chip which may be interconnected with other neural network chips to create neuron networks of substantially large size.

It is also an object of the present invention to create a neural network training algorithm which maps patterns onto groups of neurons so that the output neuron will fire when a substantial part of the input pattern is presented to the network input and the training patterns are shown a reduced number of times from that of existing networks to the network without iteration.

According to the invention there is provided an n input path digital neuron for use in a neural network, the digital neuron comprising a random access memory having $2^n$ locations one for each n input code pattern, each location being programmed with the neuron firing state corresponding to the synaptic weights allocates to the input code pattern for that neuron in a neural network by a neural network training algorithm, the neuron operating as a look-up table device deriving the neuron firing state for each n bit digital code pattern presented at the neuron input paths from the random access memory location addressed by the n bit digital input code pattern.

The invention has the particular security advantage that the synaptic weights of the trained network are not held within the neural network itself but in the equipment used to execute the training algorithm as a neuron weight memory map.

The digital neuron of the invention is capable of representing any function of its inputs depending upon the synaptic weights applied. In particular, a neuron for a specific input code combination may be programmed to provide either an interconnect function or a correlation function by the training algorithm.

In this manner the neuron, according to the invention can function as a representation of a biological neuron as well as having the ability of representing an additional set of functions.

The multiple identity is achieved by dividing the memory weight map into weight pages, the length and position of each weight page for a neuron is determined by the neural network training algorithm.

The neuron of the invention has a further advantage in that a substantially reduced interconnection architecture can be achieved over that of more conventional highly interconnected neural networks. In the case of conventional neural networks the interconnection requirements are that the number of connections is proportional to the square of the number of neurons in the preceding layer. This is because any neuron which is not fully connected to the previous layer may not, in combination with the other neurons of the network, be able to represent the desired function.

According to the invention there is provided a multi layer digital neural network in which each neuron in the network is capable of being programmed to represent any function of its inputs and a neuron is connected to the input path of a limited number of neighbouring neurons in the next layer. Typically each neuron is connected to an input path of the corresponding neuron in the next layer and an input path of the neurons located immediately above and below the corresponding neuron in the said next layer if any, each input path to the network being similarly connected to an input path of the corresponding neuron in the input layers and an input path of the neurons immediately above and below the corresponding neuron if any in the input layer.

The interconnection also incorporates an overlap arrangement whereby some neurons share a proportion of their input connection paths with other neurons of the same layer.

The restricted interconnection between neurons is made possible by each neuron being programmable to represent any function of its inputs. Essentially, small groups of neurons recognise features in the input pattern, further into the network, groups of neurons connect to the output of the first group, utilising intermediate neurons as interconnects to increase the fan-in to the required level.

The neural network of the invention is ideally constructed using a modular three dimensional cubic array having each axis of equal size, each neuron has for example nine input paths and neurons are connected together so that each neuron connects to the outputs of the three neurons above, below and corresponding in the preceding layer.

Alternative limited interconnection arrangements can be used as long as the training algorithm is aware of the arrangement selected.

The training algorithm programs the neurons of the network with the neuron firing state for each network input pattern in a single pass, the state being calculated from the synaptic weight correlation or interconnect function for that pattern by mapping each pattern, as a correlation function or interconnect, into the neurons that lie on the path between a positive input and the network output corresponding to the input pattern, the training algorithm is arranged to individually process each positive network input path of a training pattern and to identify the neurons that lie on the path between that network input and the designated network output path, the network input path is then neuron to neuron connected until it reaches all of the target outputs, at each stage one neuron out of a set of possible fan-to points is interrogated to check to ascertain if it has already learnt the required function, if none of the neurons fire, adjacent neurons are interrogated to establish the spare capacity for each neuron and the neuron having the most spare capacity is programmed to implement the required function.

The programming of a neuron may involve the merging of an existing weight map with a newly generated weight map.

In a refinement to the training algorithm the calculation of synaptic weights is based upon accumulating and propagating the significance of each input to a neuron until the output neuron is reached and using the significance of each neuron input to assist in the determination of the synaptic weights, the mapping of a neuron to implement a new function being achieved by introducing into the weight map for that neuron a new weight page.

The refinement provides during training if none of the neurons on a layer fire on the path to the output neuron, for a new weight page to be introduced into the least used neuron weight map, the length of the weight page being determined by the complexity of the inputs to the designated neuron.

The invention will be more readily understood from the following documentation which should be read in conjunction with the accompanying drawings. Of the drawings:-

Fig. 1 shows the neuron according to the invention,

Fig. 2 shows a typical fan-in for a nine input neuron,

Fig. 2A shows a number of alternative inter-layer interconnection arrangements,

Fig. 3 shows the multi layer interconnection arrangement for a typical neuron network according to the invention,

Fig. 4 shows an example of function mapping of a neural network using neurons according to the invention,

Figs. 5-8 show the mapping of input codes A-D on to neurons according to the invention,

Fig. 9 shows the cumulative ripple sequence for a specific input pattern on a typical neural network using neurons according to the invention,

Fig. 10 shows the layout of a neuron chip,

Fig. 11 shows the layout of a multi-neuron cell,

Fig. 12 shows a neuron according to the invention,

Fig. 13 shows interchip communication arrangements between multi-neuron cells,

Fig. 14 shows a multi-chip multi-neuron cube,

Fig. 15 shows the flow diagram of the "train all layers" procedure of the training algorithm,

Fig. 16 shows the key for neuron firing functions,

Figs. 17 and 18 show the flow diagram of the "train a layer" process,

Fig. 19 shows the flow diagram of the interconnect procedure,

Fig. 20 shows the flow diagram of the map procedure,

Fig. 21 shows the flow diagram of the unique map procedure,

Fig. 22 shows the flow diagram of the look around procedure,

Fig. 23 shows the flow diagram of the force map procedure,

Fig. 24 shows the flow diagram of the map in forced neurons procedure,

Fig. 25 shows the flow diagram of the record connections procedure,

Fig. 26 shows the flow diagram of the map in order procedure,

Fig. 27 shows the flow diagram of the map connection procedure,

Fig. 28 shows the flow diagram of the update procedure,

Fig. 29 shows the flow diagram of the guide procedure,

Fig. 30 shows the flow diagram of the correlate procedure,

Fig. 31 shows the flow diagram of the corrnum procedure,

Fig. 32 shows the flow diagram of the generate new weight page procedure,

Fig. 33 shows the flow diagram of the generate weights procedure,

Fig. 34 shows the flow diagram of the normalise function,

Fig. 35 shows the flow diagram of the merge weights procedure,

Fig. 36 shows the flow diagram of the memory allocation procedure while

Fig. 37 shows the flow diagram of the recall layer procedure.

The neuron according to the preferred embodiment of the invention consists of a static random access memory having one location for each digital combination of the neuron input leads.

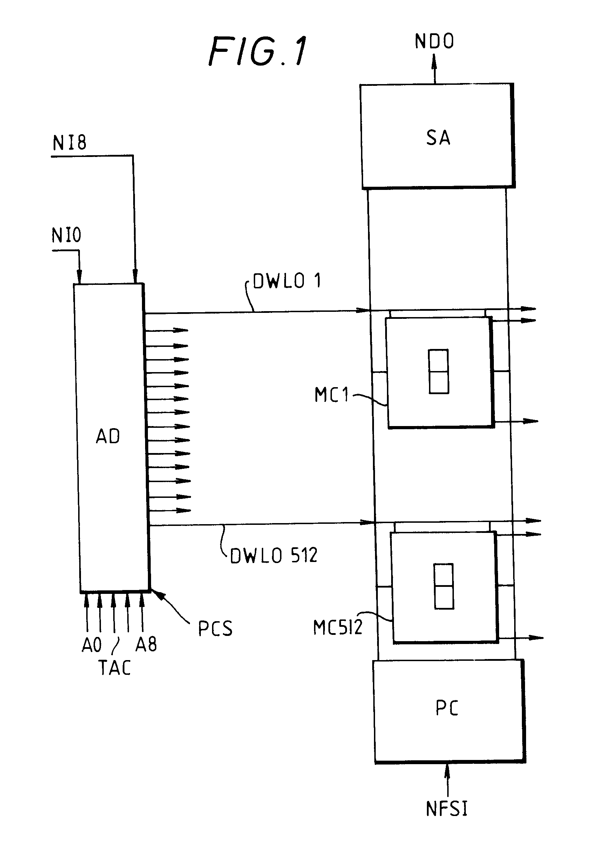

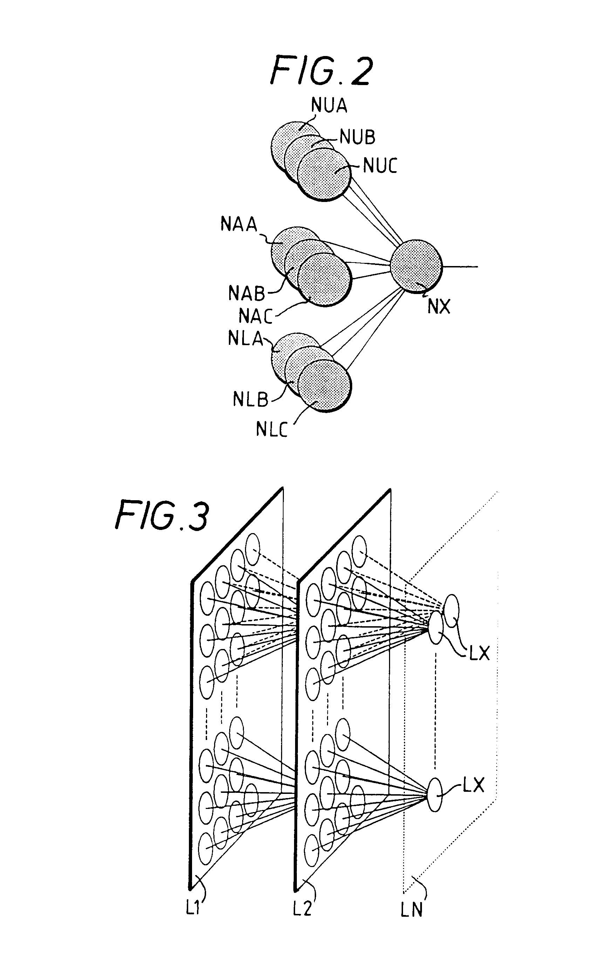

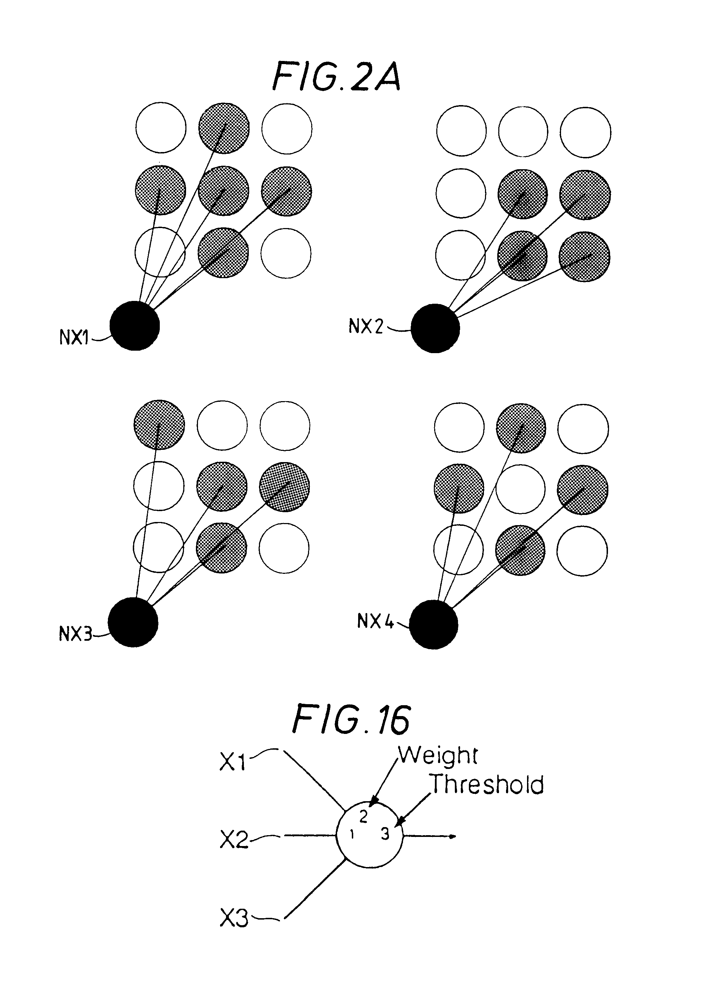

Each memory cell MC1-MC512 has nine neuron inputs NI0 to NI8and one data output NDO via sense circuitry SA. Figure 1 illustrates the memory cell, consisting of multiple address inputs NI0 to NI8 applied to an address decoder AD. The address decoder is activated by the neuron inputs when operating as a neuron and by the Training algorithm control TAC over leads A0 to A8 when the training address control signal PCS is activated so that digital Data held in the memory is modified during learning under the control of the neuron fire state control lead NFSI to realise the required function. Each memory cell functions as a nine input neuron capable of implementing any function of the nine inputs, the firing states of the neuron being held as a 1 (fire) or 0 (no fire) at the location identified by the address derived from the address decoder AD from the neuron's input leads NI0 to NI8 selecting the appropriate decoded word line output DWO1-512. The fire (1) or non fire (0) state is programmed into the neuron through the precharge circuit PC as a result of the training algorithm as a consequence of the generation of weight pages during the performance of the training algorithm. Neurons are connected together in a regular array by connecting the neuron output NDO to one of the neuron inputs (NI0 to NI8) of neurons in the next layer of the network. The neuron output is derived from the static random access memory state from the sense amplifier SA. The output layer neurons provide the outputs from the neural network. In one typical arrangement all inputs connect to outputs of neurons in the preceding layer: three

4

to neurons above, three to neurons below and three to the preceding neurons as shown in Fig. 2.

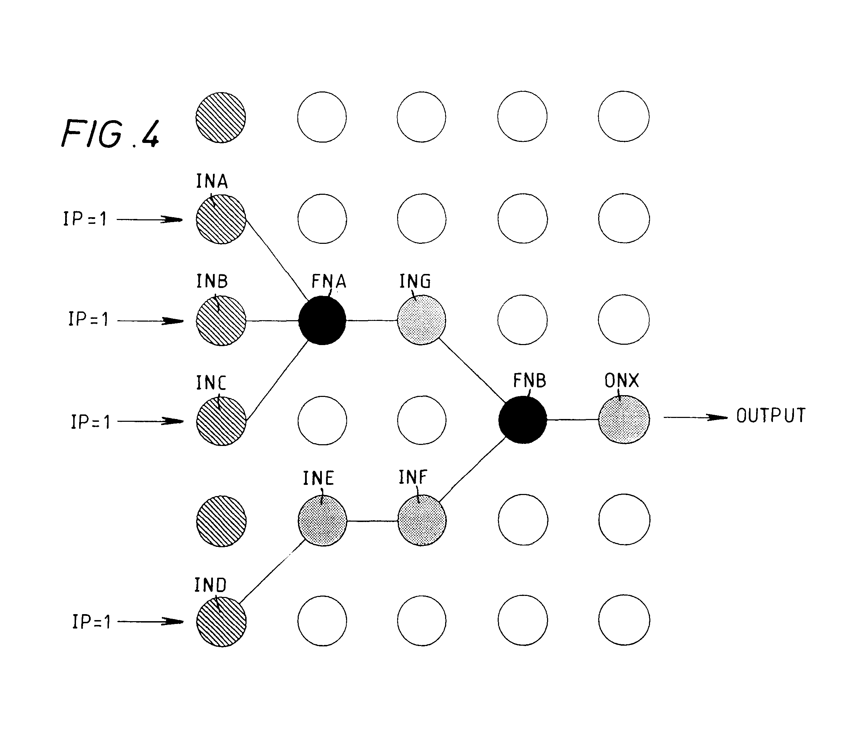

Figures 2 and 3 illustrate the connectivity of a 3 Dimensional neural network according to an embodiment of the invention, each axis is of equal size forming a cube.

The depth of the cube must equal the height and width in order to ensure that all of the inputs can fan-out to reach any output node. Typically the network is connected so that each neuron, such as NX, is connected to the output path of the corresponding neuron in the upper layers NUA, NUB and NUC, adjacent layers NAA, NAB and NAC and lower layers NLA, NLB and NLC. Fig. 2A shows four alternative reduced connectivity arrangements for neurons NX1, NX2, NX3 and NX4 where the pattern is slipped. The interconnection arrangement used is selectable as long as it accommodates the required mapping for the recognition of the input patterns to be detected. Whatever interconnection pattern is chosen, the training algorithm requires to simulate that interconnection pattern used in the actual network. Fig. 3 shows a typical multi-layer arrangement showing layers L1, L2 and LN with the output neurons LX forming the output layer.

Figure 4 illustrates functional neurons FNA and FNB and neurons acting as interconnect INA to ING to extend fan-in towards the output neuron ONX. A neuron acting as interconnect can implement a complex interconnection function, enabling the neuron to connect different neurons together under varying conditions. The significance of the interconnect function will be seen from the following description of the functioning of the network. To ease the understanding of the functions performed by the network a simplified version will be used as an example.

## FUNCTIONING MAPPING

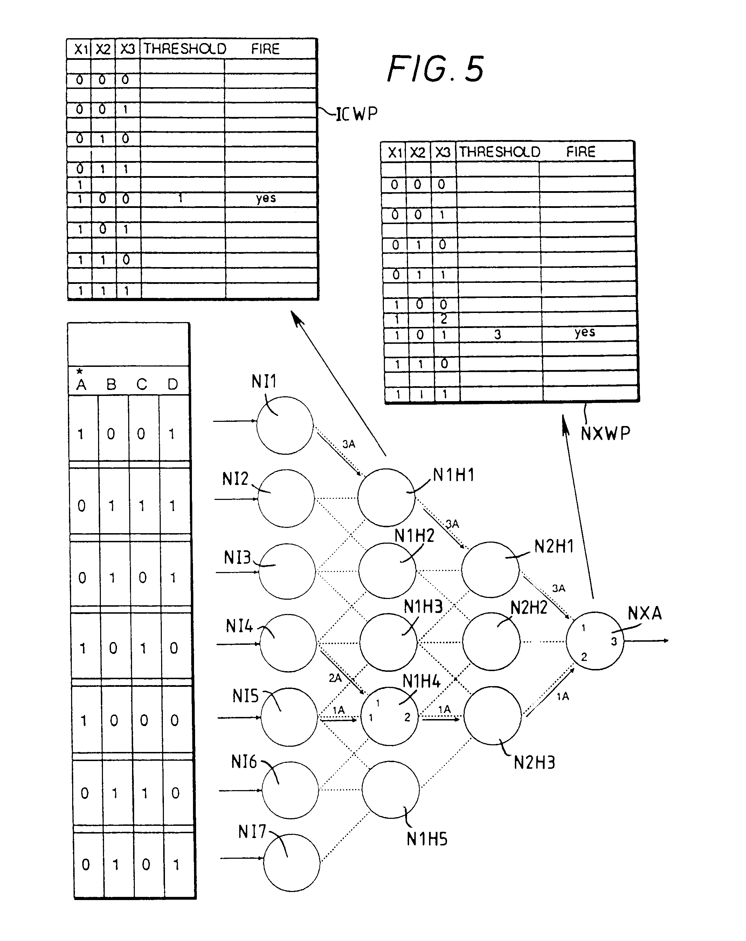

When the network is first shown a set of training patterns its neurons are totally un-configured, each input has to be stored as a set of synaptic weights. When the network has been trained several times some of the neurons begin to recognise features in new input patterns and as a result, less of the synaptic weights require modification. Figures 5 to 8 illustrate a nine neuron three layer two dimensional network during the training process for each input pattern or set. The training process processes positive inputs in the sequence represented by the numbers 1A, 2A and 3A in the table shown on the left of Figure 5 from the input layer and 1A and 3A at the output of the hidden layers to identify the specific output neuron conforming to the input pattern represented by pattern A. The tables shown in these figures 5 to 8 indicate (i) the interconnect functions ICWP within one of the hidden layers and (ii) the output layer cell recognition function NXWP of the input pattern. In these figures the dotted line shows inactive neuron connections whereas the full line between neurons shows active neuron connections. For illustration purposes only the same output neuron shown as NXA, NXB, NXC and NXD respectively is used to detect each of the input patterns applied to the network.

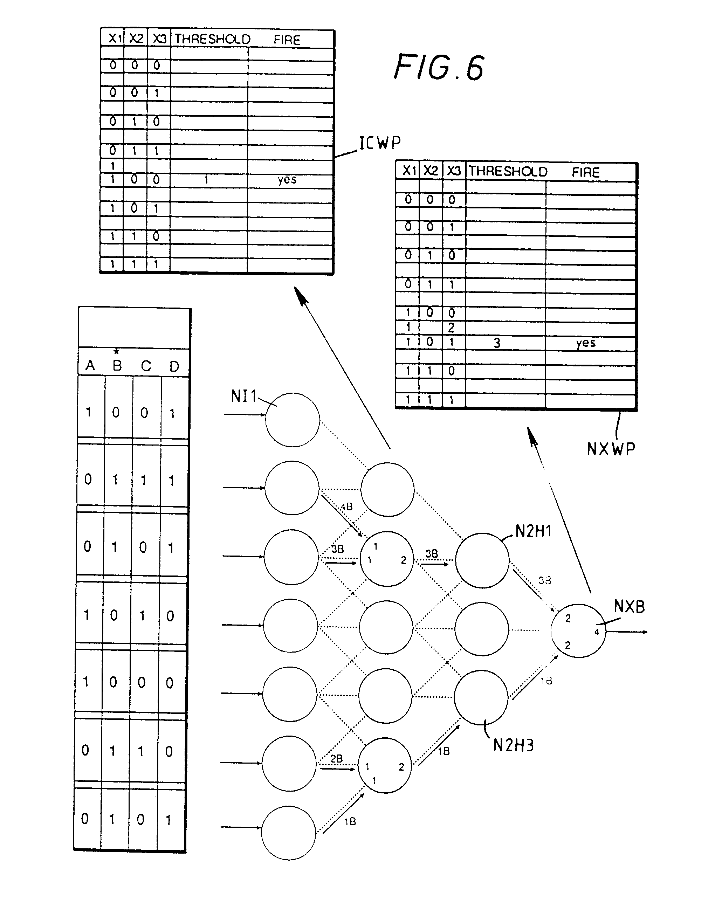

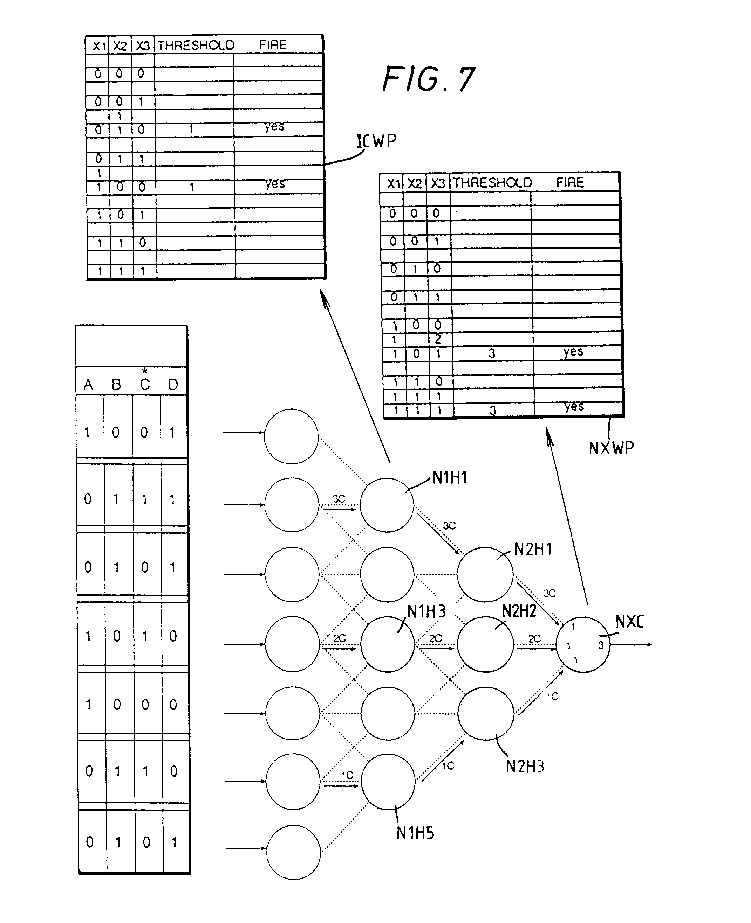

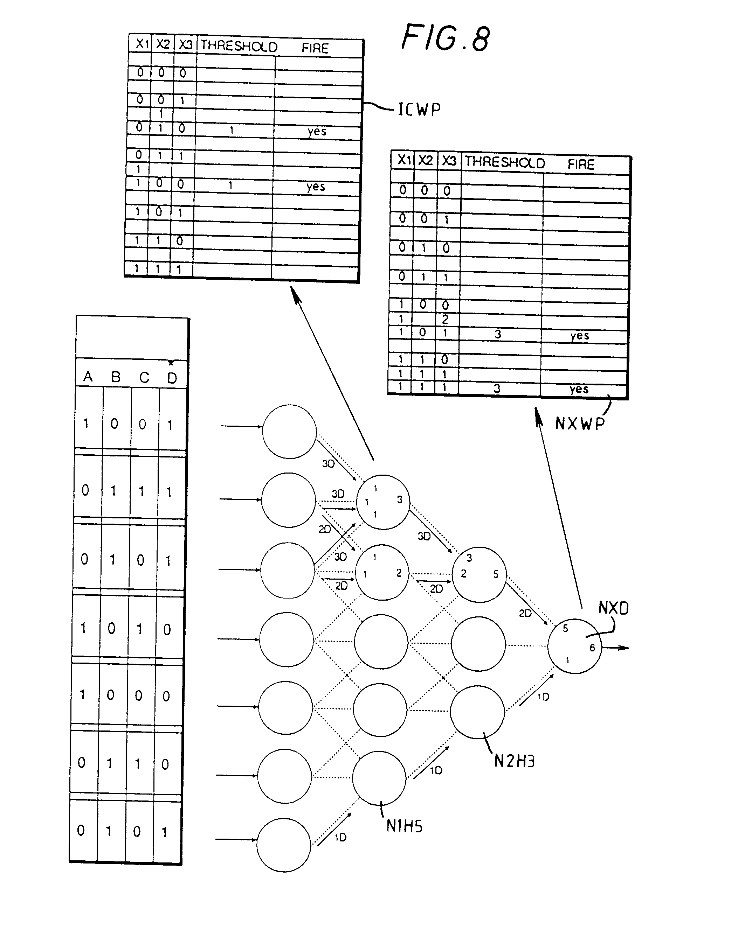

The four training sets or input patterns A to D are presented to the network pattern A in Fig. 5, B in Fig. 6, C in Fig. 7 and D in Fig. 8. The training algorithm maps each pattern (as a function or interconnect) into the neurons that lie on the path between a positive input and the network output. Many of the neurons in this simple example utilise the same mapping for different patterns. As the network learns more patterns fewer and fewer neurons need reconfiguring. Eventually the network will saturate and no further patterns can be learnt without affecting the networks' ability to recall old patterns.

Considering firstly Fig. 5 the pattern 1001100 will cause neurons NI1, NI3 and NI4 to fire. Neuron N1H1 in the first hidden layer will act as an interconnect while neuron N1H4 responds to the partial pattern recognition function ---11--. In the second hidden layer neurons N2H1 and N2H3 act as interconnects permitting the output neuron NXA to recognise the input pattern. The input pattern is processed so that positive inputs (1) are processed in sequence and the number shown on the active neuron connection corresponds to the order of processing of pattern A starting with the '1' state positive input to neuron NI5. The table ICWP shows the interconnect function of the first hidden layer neuron only. The output layer recognises the input pattern A by the programming of neuron NXA to fire with input weights on X1, X2 and X3 of 1 0 2 respectively.

In Fig. 6 the output neuron NXB recognises the input pattern B without the need for retraining since its input weights on X1, X2 and X3 are 2 0 2 respectively which exceeds the threshold of three set in recognising pattern A. In Figs. 7 and 8 the input patterns C and D cause the output neuron to recognise the input weights X1, X2, X3 conditions 1, 1, 1 respectively for pattern C and 5, 0, 1 for pattern D. In Figures 6 to 8 identified neurons act as interconnects.

## MULTIPLE IDENTITY NEURON

Table 1 shows the memory contents of a five input single identity neuron. The weight assigned to each input is shown at the top of table 1 at the end of this specification, along with the threshold value, above which the neuron will fire. Each weight may assume any value whether positive or negative. Such a weight table is produced during the training process, however, only the appropriate neuron firing state is programmed into the memory locations of the random access memory of the neuron.

Each neuron in the network is arranged to contribute towards the recognition of the input pattern through its ability to operate as a function of its input pattern or as an interconnect. Although table 1 gives a picture of all the firing states for all the neuron input path condition combinations a limited number of combinations can be used dependent upon the relative significances (synaptic weights) of their contribution to the fire or no fire decision. Advantage of this fact can be taken in arranging that each neuron is capable of recognising a number of differing input significances.

A multiple identity five input neuron is shown in table 2. The memory map is divided into several sections, each section can implement a new set of synaptic weights. In this way each neuron is able to represent more functions than its conventional analog counterpart. The length and position of each weight page in the memory map is determined by the training algorithm.

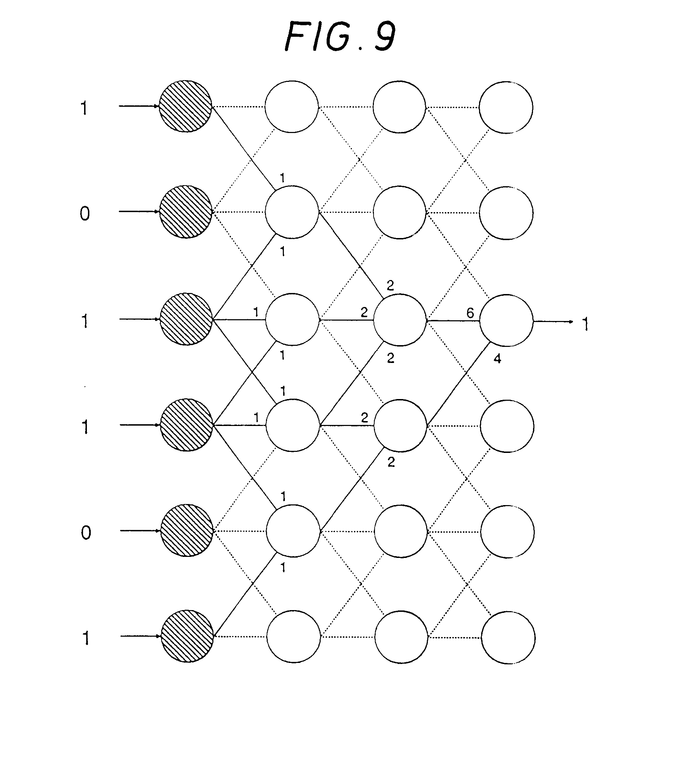

Figure 9 illustrates a three layer eighteen neuron network. The input training pattern "101101" is shown to the left of the network and again dotted connections signify inactive connections while the solid lines indicate active connections. Each input that has a positive value is mapped through to a selected output neuron. At each neuron the number of inputs and the significance of each input is used to calculate the appropriate input weights. The significance of each input accumulates at each neuron as it ripples through towards the output neuron and this feature is used in the training algorithm to be described in detail later.

## NEURON

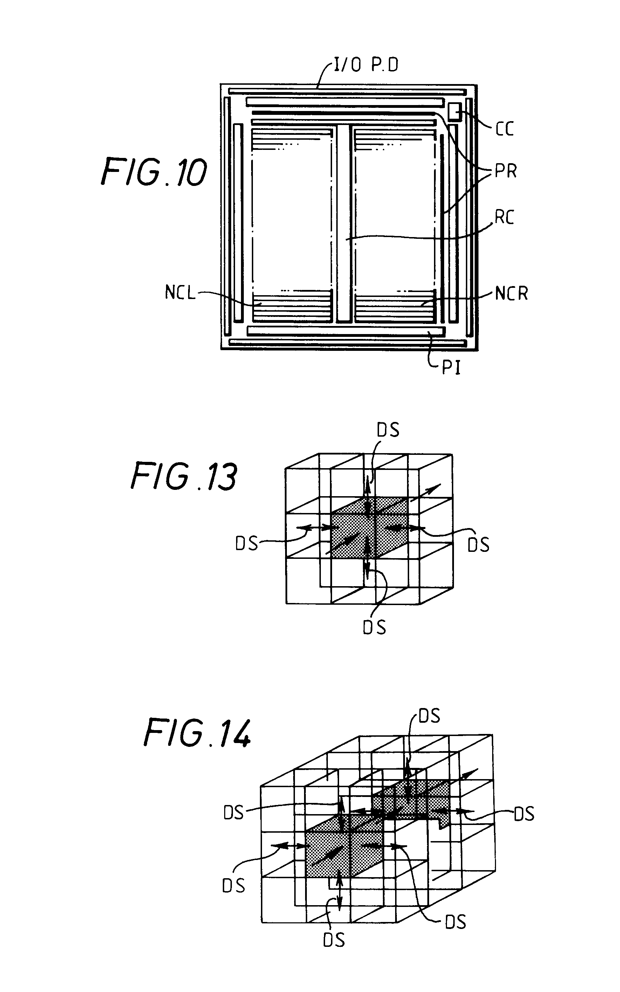

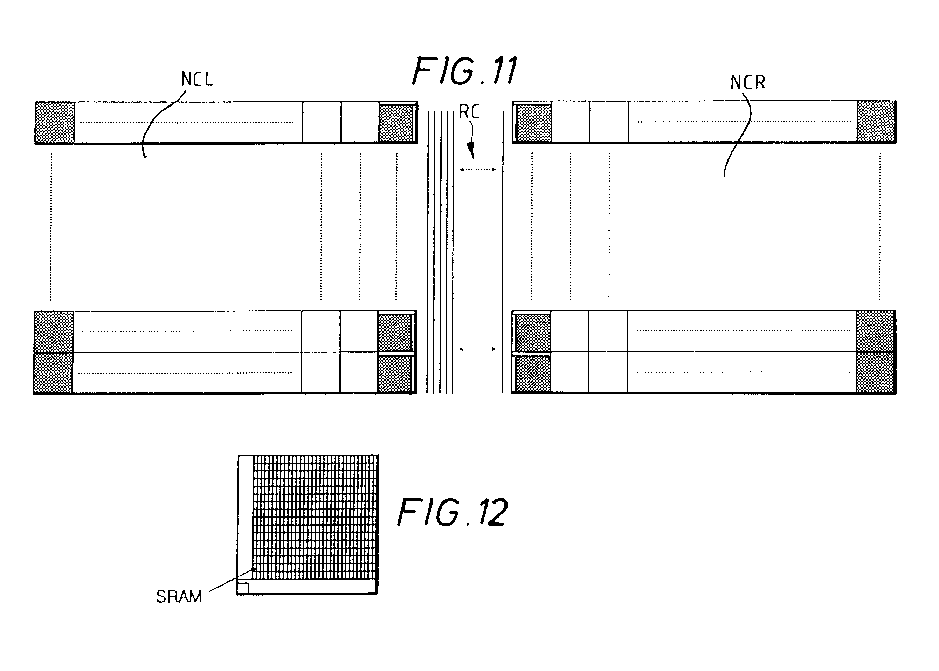

The neuron architecture has been designed to be scalable allowing any desired network to be realised from the basic multi-neuron chip, Figure 10. The chip is provided with input/output pads and drivers I/OP&D, a control register CC, programming registers PR, a programmable interface PI, two banks of neurons NCL and NCR interconnected by a routing channel RC. Each chip integrates in a 13 x 13 x 13 network 2,070 neurons. Figure 11 illustrates how the chip is organised, two banks of neurons are separated by a routing channel, each bank of 1,035 neurons is organised as a 23 x 45 block of 512 bit static random access cells.

Each neuron consists of a 512 x 1 bit SRAM, including address decode, sense-amplifier and output buffer. Figure 12 illustrates the core of the random access memory which is surrounded by two address decoders, 4 to 16 and 5 to 32. Each SRAM cell measures 12 x 8 microns, individual neurons including decode, sense-amp and buffer measure 296 x 232 microns, the whole chip including routing is 13.3 x 11.6 mm.

The multi-neuron chip has five modes of operation, these are shown in table 3. Modes 1 and 2 are intended for single chip networks, mode 2 reads three input data words of sixty four bits (3 x 25 nsec), performs network functions and outputs three words of sixty four bits. In data path applications the network can process a new input (169 bits) every 75 nsec. Mode 1 facilitates serial loading of input data, applications that time shift inputs such as speech processing, shift each input pattern left and fill the right most column with new data, in this mode the network operates three times faster.

Modes 3 and 4 are used for multi-chip networks, in both modes the input and output register word lengths are reduced from 64 bits to 22 bits, a new 85 bit inter-chip register communicates connections at the edge of the network to adjacent chips. Mode 4 reads eight input data words of twenty two bits (8 x 25 nsec), communicates eight data words of sixty four bits to peripheral chips, performs network functions and outputs eight data words of twenty two bits. For data path applications the whole network processes a new input pattern (in bits) every 200 nsec.

Training the network utilises mode 5, during training the neuron firing states are updated through a 32 bit register. To train the whole network 35,152 write operations of 32 bits are required for each chip.

## NEURON CUBE

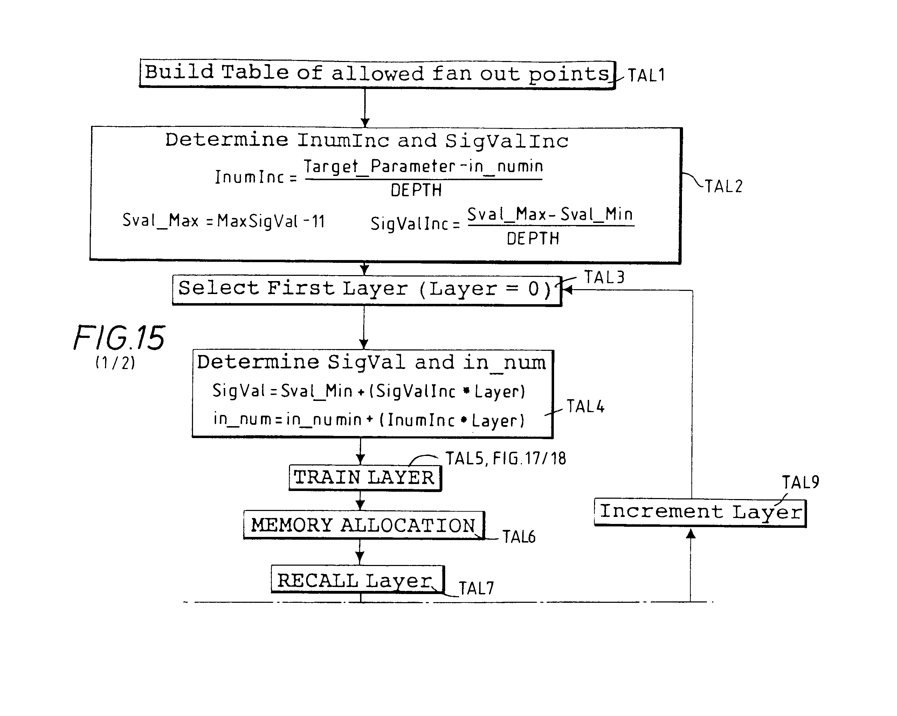

Figure 13 illustrates nine multi-neuron chips connected together. Outputs from the edge of each chip communicate through high speed inter-chip buffers, transferring the complete 22 bit I/0 port 169 bit data word DS takes only 200 nsec, any size network achieves the same data path performance 200 nsec/input word. Figure 14 illustrates a 27 multi-neuron chip cube, organised as 59,319 neurons.

The neural network of the invention is a multi-layer, binary, feedforward network designed specifically for implementation in a digital access memory circuitry. The system has three unique features;

(i) A limited interconnect requirement. This allows network size to grow without an exponential rise in hardware complexity and processing time.

(ii) A single pass supervised learning algorithm. Multiple presentations of the training data are not required and no iteration is involved in learning.

(iii) A recall mode in which network weights are not required for classification. Active neurons address memory locations which report either 'O'=unrecognised or '1'=recognised. This facilitates high speed processing.

It is intended that each neuron chip will contain 2,070 neurons in a 13 x 13 x 13, 3 Dimensional architecture (13 x 13 neurons per layer and 13 layers per chip). Each neuron has nine I/O connections producing 18,630 synapses per chip. Networks of any size may be constructed by continually connecting chips. Since only 169 (13 x 13) interchip I/O connections are required, it will be possible for each chip to process a new input every 200 nsec. Chip size will be 13.3 x 11.6mm. A 512 multi-neuron chip cube (512 chips connected in a cube formation) will be capable of processing $>10^6$ neurons with $>5 \times 10^{13}$ synapses per second. This compares very favourably with existing neural network chips which average 32 neurons and 1000 synapses per chip.

Each neuron is a 512 x 1-bit static random access memory. The nine connections to each neuron provide the 512 ($2^9$) addresses to the memory. These 512 memory locations allow the neuron to learn a variety of sub patterns.

The user will specify the input pattern at layer 1 and the output neuron at layer n=13. Connections will receive weights in accordance with the mappings defined by the training algorithm. "Functional" neurons will learn particular sub-patterns while "Interconnect" neurons will guide activity to the Target Output neuron. Each neuron can store P pages of weights (where P is user defined) which are thresholded (to a level set by the user) to provide the memory addresses for storage of '1'=recognised and '0'=not recognised. Adjusting the threshold level will alter the generalising properties of the net.

## THE TRAINING ALGORITHM

During the training process each set of training patterns has an output neuron associated with it. The training algorithm maps patterns into groups of neurons of a simulated network so that the output will fire when a substantial part of the input pattern is presented to the network input. Training patterns are only shown to the simulated network once, as the training algorithm calculates the correct synaptic weights on the first pass, no iteration is required.

During training only inputs with positive values are processed. Each positive input is identified and individually processed, the propagation algorithm identifies neurons that lie on a path to the designated output.

The input is then neuron to neuron connected in the simulation of the network until it reaches all of the target outputs, at each stage each neuron out of a set of possible fan-to points is interrogated to check if it has already learnt the required function. If none of the neurons can respond to the required function, adjacent newons (up to nine) are interrogated to establish the spare capacity of each neuron, the neuron that has the most capacity is modified to implement the new function.

The significance of each neuron input is used to help determine the synaptic weights. When a neuron that is to be mapped into a new function does not have the required weights, a new page of weights is introduced.

Each neuron contains multiple pages of firing states, equivalent to the synaptic weights, this enables each neuron to represent any function of its inputs. During training a new page of weights is introduced if none of the neurons fire on the path to the output neuron, the least utilised neuron is assigned the new weights. The length of the weight page is determined by the complexity of the inputs to the designated neuron. A typical weight page WP is shown in Table 4.

Each of the inputs to a given layer are fully processed to form the inputs to the next layer.

When the training pattern is learnt the training algorithm reduces the dependence of each of the neurons involved in the representation of the desired function, this ensures that the network will respond to inputs that are partially corrupted or incomplete.

It is only necessary to train the network with each pattern in the set once to ensure a reliable result, further training does not improve the result. Old memories are not corrupted by learning additional patterns until the network is saturated.

Inputs to the network can be from any source and the algorithm used to train the network can be applied to learning any function. There is always a guaranteed training time and the network is always stable as there is no feedback.

The algorithm constrains the connections that can be made in the network as follows:-

A neuron may be either an interconnect or a functional neuron, never both.

Where possible, connections should be made in the direction of the output target neuron.

A neuron may have only one Active Output Connection to the next layer. As such, input connections and thus weights are defined as Active Connected Neuron (positive weight), Active Unconnected Neuron (inactive weight) and Inactive Neuron (negative weight).

A correlation value is used to check if sub-patterns already learnt are present in the current pattern. If the correlation is high enough, the sub-patterns will be added to an existing set. If the correlation value is not high enough the sub-pattern will be learnt as new to the network.

The algorithm must decide, for each active neuron, which connection will provide the best route to the target output neuron. Since each nth layer neuron has nine possible inputs from layer n-1, so each n-1th layer neuron has nine possible locations in the next layer that it can connect to. The algorithm will first determine if there are sufficient neurons in the current layer that can map together to form a feature. The mapping function must decide which next layer neuron will provide it with the best route to the target output neuron. If a feature cannot be mapped, routing of individual neuron activity as interconnects must ensure that, in the subsequent layer, the neurons will form a unique feature for that class of pattern.

Mapping is constrained by requiring that approximately 6 active neurons are present in the penultimate layer to address the output target neuron. This prevents pattern convergence occurring too quickly in the layers and thus reduces data compression. In addition, each neuron has a significance value defining the level of information flowing through it. A neuron with a high significance will be prevented from mapping at an early stage to maintain a relatively equal share of information among the neurons in a given layer. Similarly, a neuron with a particularly low significance will be forced to map into other neurons. The definition of high and low significance increases with network depth and is scaled by the level of activity in the input layer.

The correlation value is used to determine weight updates. If the current pattern does not match those already learnt by a particular neuron then a new page of weights is generated. If the correlation value is between the match and no match thresholds then a new page of weights is merged with the best existing weight page. If the correlation value is above the match threshold no weight update is required and the next layer neuron is activated.

The network algorithm is essentially a routing algorithm. The weights are used to calculate correlation and thus determine whether existing routes can be used or new routes created. During recall the input pattern is free to follow any connection paths through the network that are active. In the lower layers this will usually cause a number of erroneous activations to be present but these quickly die towards the output layer as there is insufficient activity for continued propagation.

## TRAINING ALGORITHM OVERVIEW: THE TRAIN ALL LAYERS PROCEDURE

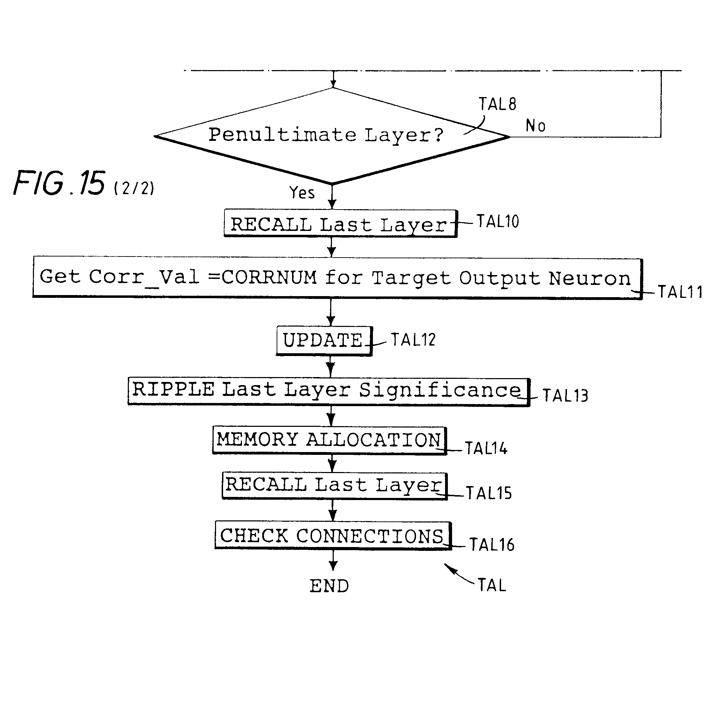

In practice the algorithm operates in only two modes, Learn or Recall. The Learn mode is the essence of the training system. The first level of control, the Train All Layers (TAL) procedure, is given in Figure 15.

The Build Table function, in step TAL1, identifies neurons available for connection for the particular pattern to be learnt. Availability is dependent upon the target output neuron. Since each neuron can connect to its' nine near neighbours, available neurons are calculated from the target back to the input taking into account the network connection architecture.

The neurons without control tend to map together as soon as possible resulting in one or two connection paths leading to the target output neuron. This is undesirable because the loss of a path would remove the possibility of pattern classification. The interconnection paths are arranged so that, there are an optimum number of connections to the target output neuron. This optimum can be defined by the user via a "training algorithm target parameter". In addition, the target parameter connection paths are given approximately equal significance. The algorithm ensures that high significance neurons are not mapped together, and low significance neurons are forced to map to prevent them propagating to the target output.

In addition the training algorithm mapping is constrained so that:-

(i) The minimum number of input neurons required for a map function is on a sliding scale from three at the input to the optimum number (Target Parameter) at the output.

(ii) A neuron may not act as both a functional neuron and an interconnect neuron.

(iii) An existing functional neuron can only learn a new sub-pattern if it is sufficiently close to an already learnt sub-pattern. This prevents the same neuron learning sub-patterns for all the input classes.

The definitions of "high significance" and "low significance" are used, along with a sliding scale, for the number of inputs to a mapping function. For a given pattern, the maximum significance at the target output is the number of active neurons in the input layer multiplied by the input layer significance (defined by Sval min). The high significance value (MaxSigVal) is defined to be the maximum significance at the target output divided by the optimum number of connections to the target output (defined by Target Parameter). The number of neurons required for a mapping function at each layer (defined by in num) is on a sliding scale of 3-to-the target parameter.

Each layer is selected in step TAL3 in turn and trained using steps TAL4 to TAL9. The training procedure, in steps TAL4 and TAL5, identifies the best types of connections to be made between layers n and n+1. Once all the connections between the layers have been identified the contents of the neuron memory locations are calculated by the MEMORY ALLOCATION procedure in step TAL6. The RECALL procedure in step TAL7 is then executed to specify the firing states of the n+1th layer neuron in accordance with the values stored in the neuron memory locations by the MEMORY ALLOCATION procedure previously created in step TAL14.

Neurons in the n+1th layer fire in response to patterns learnt in the nth layer, and these n+1th layer firing neurons act in turn as the inputs to layer n+2. This process repeats around the loop of steps TAL3 - TAL9 to the penultimate layer. Since all the firing neurons in the penultimate layer must connect to the target output neuron there is no need to calculate a connection path. The Recall procedure in step TAL10 will interrogate the target to see whether it recognises the penultimate layer pattern. A correlation value (corr Val) is also obtained in step TAL11 to indicate the degree of recognition of the pattern by the network. The target output neuron is updated in step TAL12 in accordance with its firing state and the correlation value. Next the significance of the input nodes is fed to the target output in step TAL13 and recall executed again (step TAL15) since a weight update may have caused a previously non-firing target output to fire. Finally, those neurons at any point in the network which are directly connected to the target output neuron (i.e. do not undergo any further mapping functions apart from that at the target) are identified by the Check Connection function step TAL16.

The following description identifies the functions performed by the procedures used in the various steps of the training algorithm of Fig. 15. Reference is made to the section and flow diagram figure in which each procedure is described and shown.

## 1. THE TRAIN LAYER PROCEDURE (TAL5)

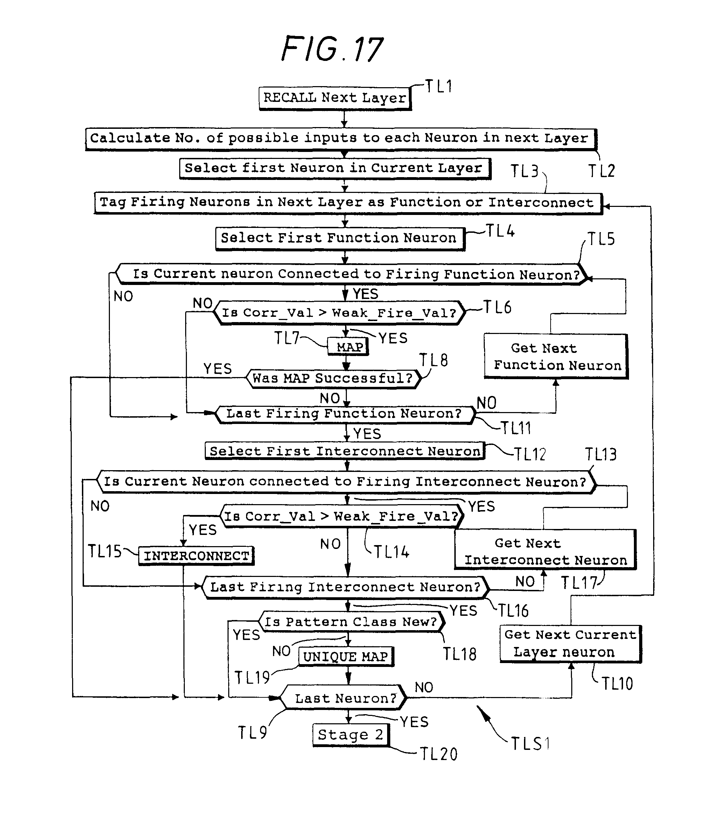

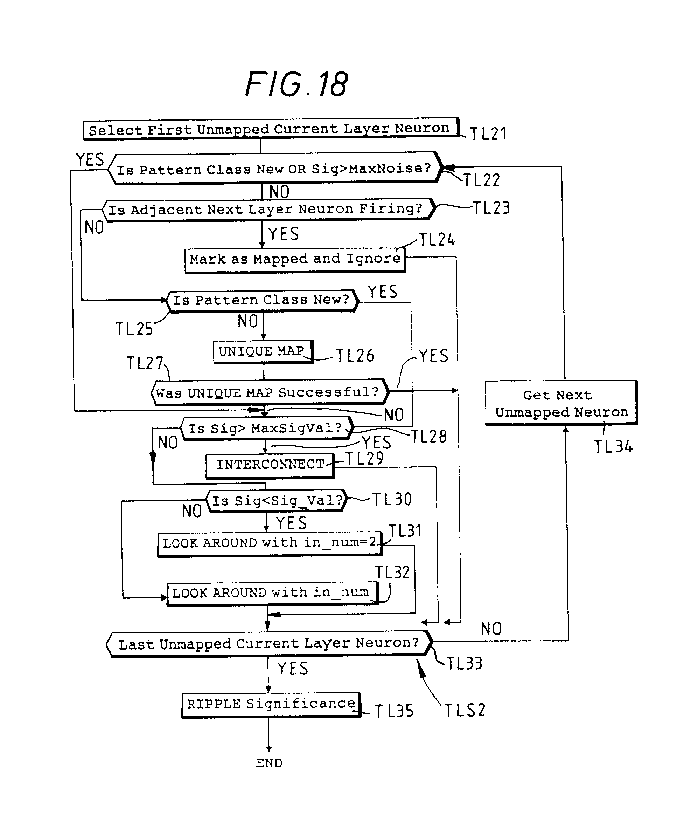

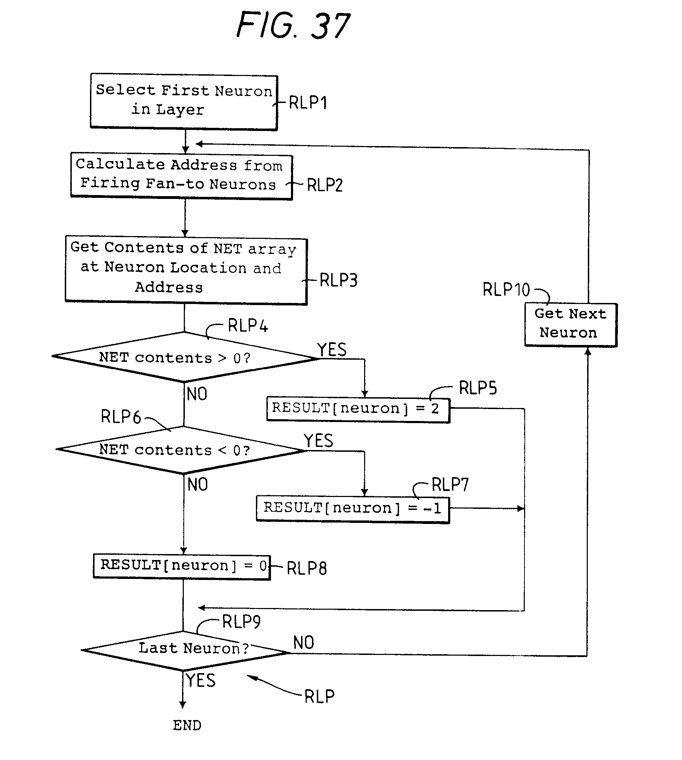

The Train Layer (TL) procedure is shown in Figs. 17 and 18. Firstly in stage TL1, layer n1 is recalled using the recall procedure (see Fig. 37 and section 21 below) to see if any neurons are already firing indicating that they recognise a sub-pattern. The number of possible inputs to neurons in layer n+1 from neurons in layer n is then calculated in stage TL2. The procedure then executes in two stages.

The first stage (TLS1), shown in Fig. 17, determines if the network has already learnt connections for specific neurons. For each nth layer firing neuron it:-

1. Tags, using stages TL3 and 4, all next layer firing neurons as function or interconnect neurons.

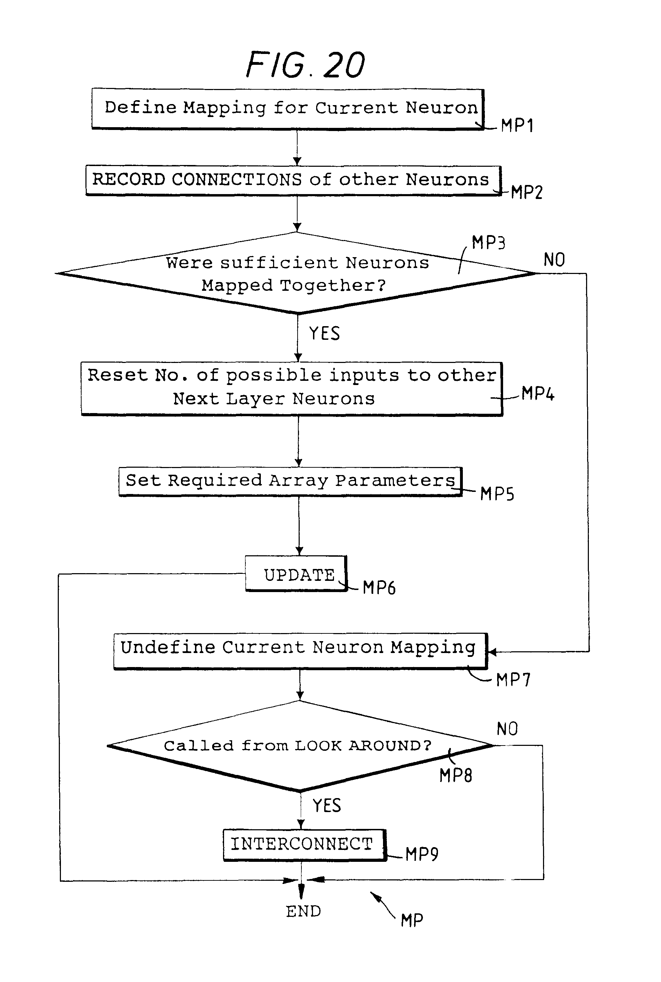

2. Takes the tagged "function" neurons in turn using steps TL4 and TL5 and checks to see if a connection exists between the current nth layer neuron and the tagged function neuron. If a connection does exist and the correlation value is greater than the weak fire value (user defined), as defined by step TL6, a MAP procedure (see Fig. 20 and section 3 below) is called in step TL7. This procedure, if successful, will mark the current nth layer neuron as mapped, around the loop of steps TL8, TL9 and TL10 with re-entry into step TL3.

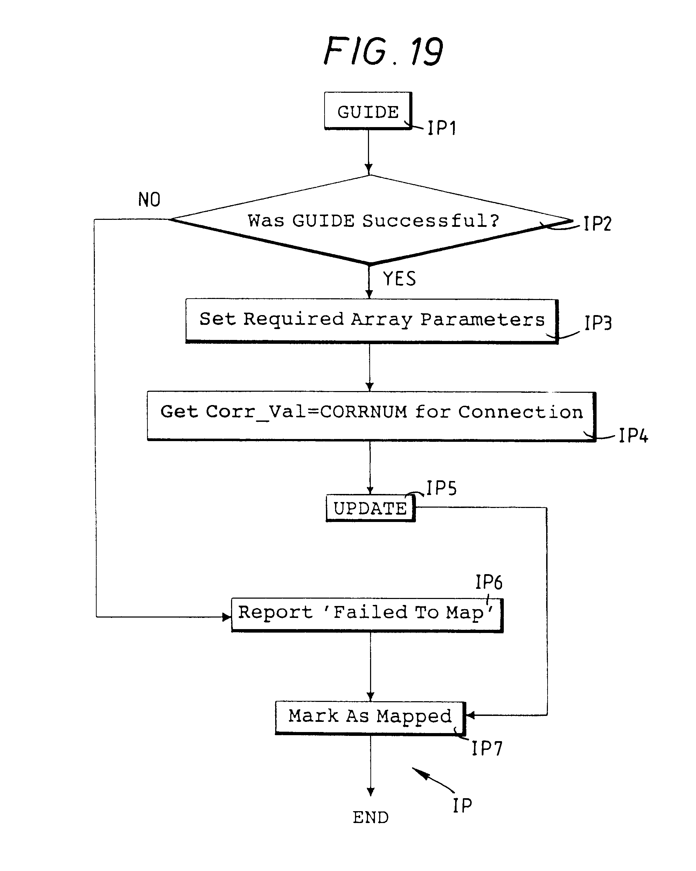

3. If the current nth layer neuron was not mapped successfully, as detected in step TL8, the tagged interconnect neurons are checked in turn in steps TL11, TL12 and TL13 to see if a connection exists between it and the current nth layer neuron. If the connection exists and the correlation value is greater than "weak fire val", as detected in step TL14, an INTERCONNECT procedure step TL15 (see Fig. 19 and section 2 below), is called. This procedure, if successful, will mark the current nth layer neuron as mapped, returning through step TL9 to step TL3 again.

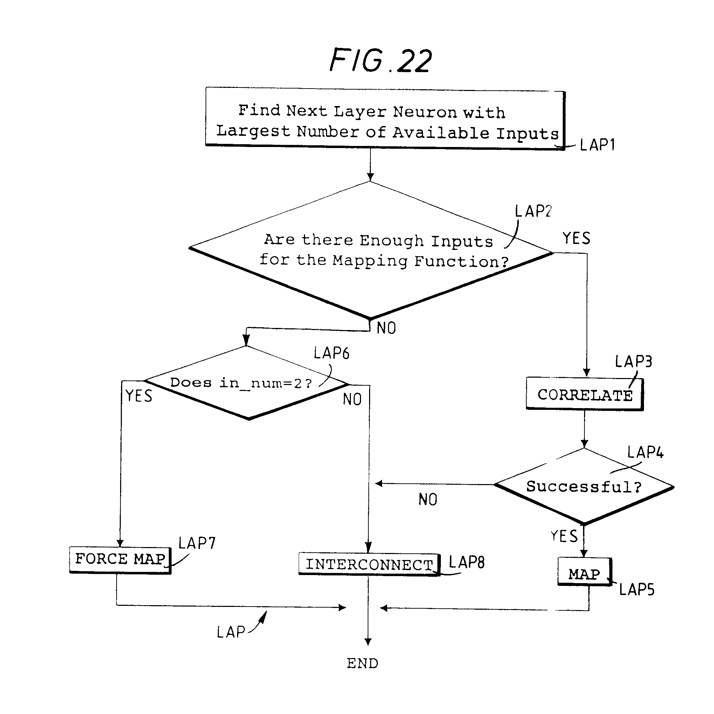

4. If no tagged function or interconnect n+1th layer neurons exist connected to the current nth layer neuron or the correlation value is high enough, the nth layer neuron is checked for uniqueness using steps TL16, TL17 together with TL13 and TL14. If the pattern being learnt is not a new pattern, as detected by step TL18, it could be that previous learn functions only identified one connection for the current neuron. If this is the case, a UNIQUE MAP procedure step TL19 (see Fig. 22 and section 5 below) will identify the unique connection.

The "train a layer" procedure stage 1 is recycled using steps TL9, TL10 to TL3 until the last stage neuron is processed whereupon stage 2 is entered at step TL20 into step TL21.

The second stage (TLS2) of the "train a layer" procedure is shown in Fig. 18 and reassesses those neurons in the nth layer which were not marked as mapped by the first stage. If the pattern does not belong to a new class, as detected by step TL22, then it is checked firstly for noise then for uniqueness:-

Noise    If the significance of an unmapped nth layer neuron is less than MaxNoise (user defined) and a next layer neuron is firing, as detected by step TL23, then the current nth layer neuron is ignored as noise in step TL24.

Uniqueness    If the unmapped nth layer neuron cannot be ignored as noise, step TL25 checks to see if a unique connection exists for this neuron in steps TL26 and TL27.

For a new pattern, or following failure on the above two checks, step TL28 operates to determine a new connection path. If the significance of the current nth layer neuron is greater than "MaxSigVal" as detected in step TL28, then the INTERCONNECT procedure TL29 (see Fig. 19 and section 2 below) is called. If the significance is less than "sig val" as defined by step TL30, a LOOK AROUND procedure (see Fig. 22 and section 5) is called, in step TL31, to find a connection to an n+1th layer neuron with at least 2 inputs available. If the significance is within the "sig val" and "MaxSigVal" limits (No output from step TL30), then LOOK AROUND is called in step TL32 with the requirement that the current nth layer neuron be connected to an n+1th layer neuron with at least "in num" inputs available to it. (The steps performed by the LOOK AROUND procedure are shown in Fig. 22 and described in section 5 below). The above procedure is performed for each of the unmarked neurons in the nth layer, cycling around through steps TL33 and TL34 to re-enter TL22.

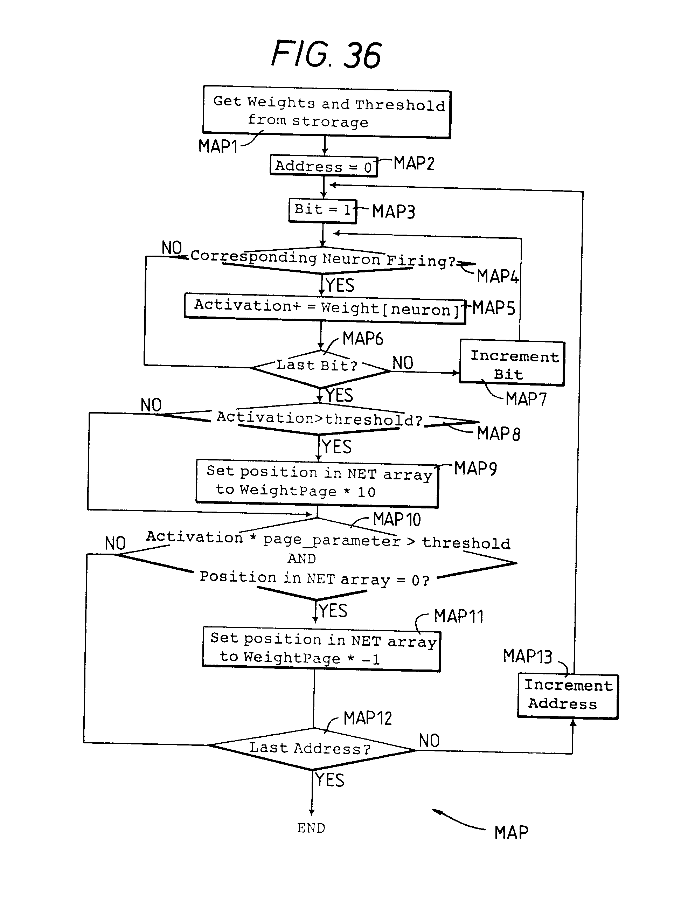

The final process executed by the Train Layer procedure stage 2 is to calculate the significance of the n+1th layer neurons. This is achieved via a call to the RIPPLE SIGNIFICANCE procedure (see Fig. 36 and section 20 below) in step TL35.

The following description gives in outline the functions performed by each of the procedures identified in the "train all layers" algorithm and "train a layer" procedure, together with various procedures called by those procedures.

## 2. THE INTERCONNECT PROCEDURE IP. Fig. 19

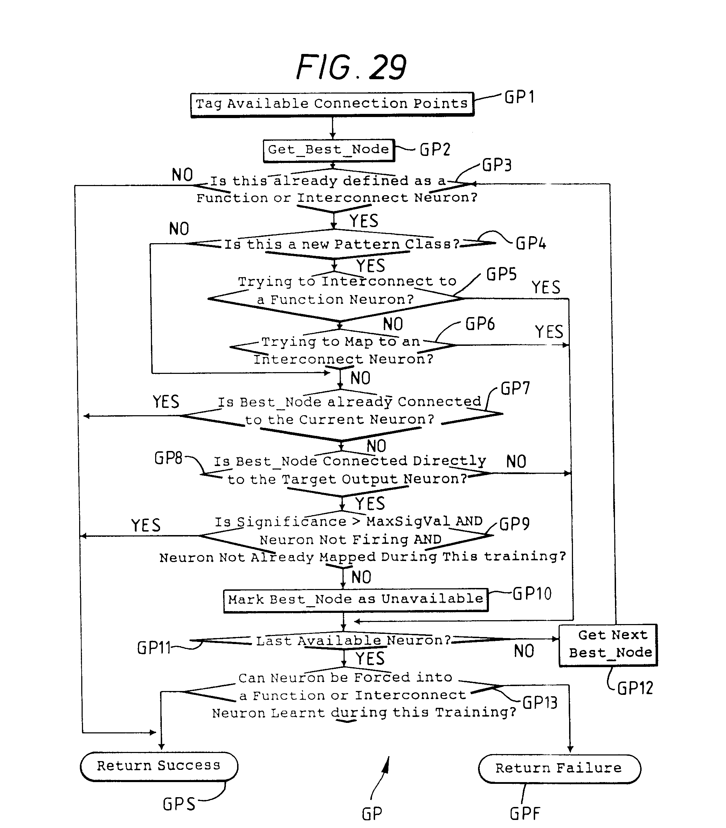

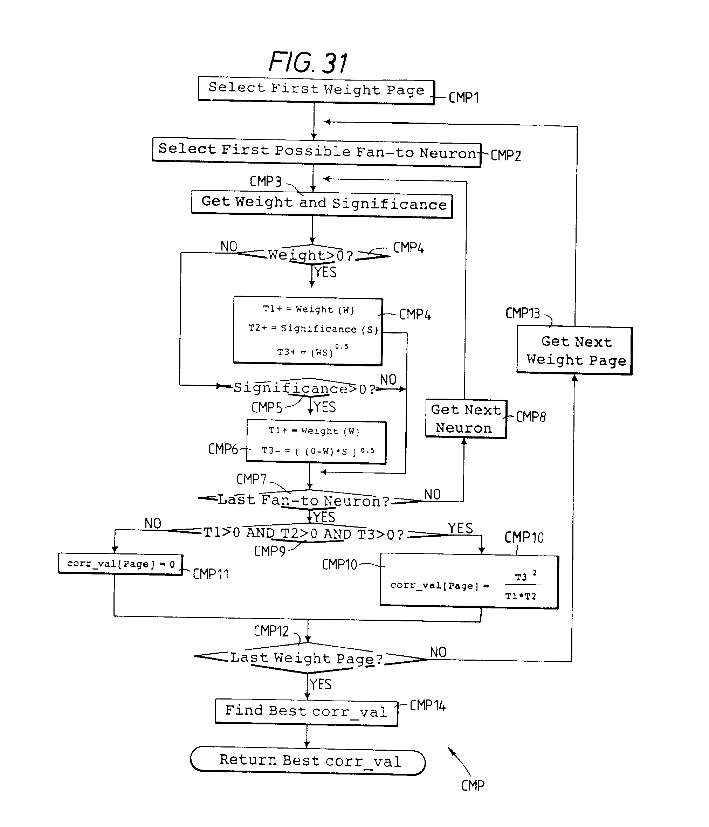

Initially a GUIDE procedure step IP1, described later in section 12 and shown in Fig. 29, is called to determine the best next layer neuron to connect to. If a connection point is found step IP2, all array parameters affected by the connection are updated step IP3 and the correlation value determined in step IP4 via the CORRNUM procedure (see Fig. 31 and section 14). The weight UPDATE procedure step IP5 (section 11) is then executed. If a connection point is not found in step IP2 a 'Failed to Map' error is reported in step IP6. Either way the neuron is marked as mapped by step IP7. If the neuron failed to map it is effectively stored as mapped with no connection point. This prevents continual appraisal of the neuron when no connection path exists.

## 3. THE MAP PROCEDURE MP

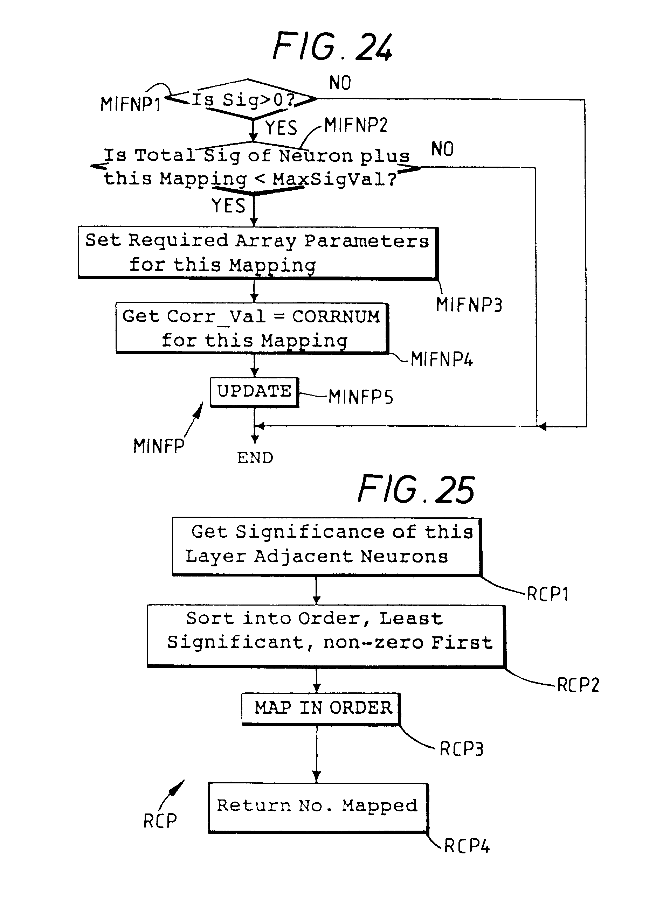

The Map procedure shown in Fig. 20 is called only when a possible next layer function neuron is identified in stage 1 of the "train a layer" procedure. The current nth layer neuron will only be connected as a 'Map' in step MP1 to the next layer neuron if other nth layer neurons are also connected. The other nth layer neurons are, therefore, checked to ensure that mapping is possible. This is achieved in step MP2 via the RECORD CONNECTIONS procedure (see Fig. 25 and section 8). It may be that, for example, three neurons are available (and required) for mapping but the implementation of such a mapping would put the significance of the next layer function neuron above the allowed maximum value of "MaxSigVal". The mapping function would not, therefore, be allowed by exiting from step MP3 via the 'no' route.

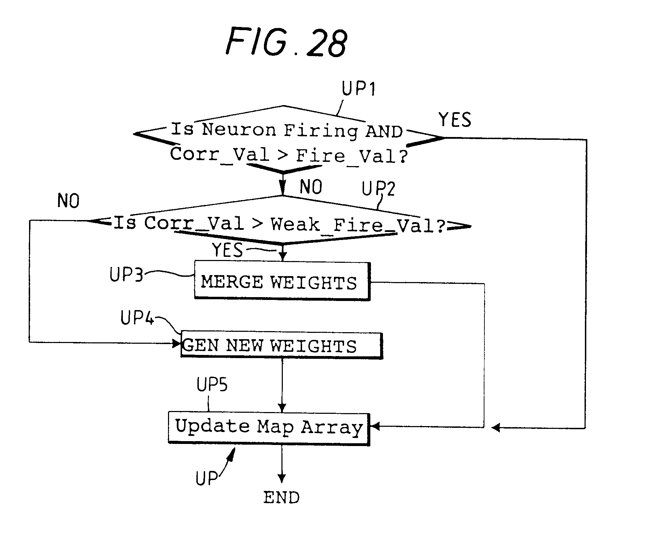

If mapping is successful all array parameters affected by the connections are updated in steps MP4 and MP5 and the correlation value is determined via the CORRNUM procedure (see Fig. 31 and section 14). The weight UPDATE procedure step MP6 (see Fig. 28 and section 11) is then executed and all the nth layer neurons involved in the mapping function are marked as mapped. If it is not possible to map the required number of nth layer neurons to the n+1th layer neuron (step MP3 route no) the mapping function is terminated in step MP7 and connections defined by the RECORD CONNECTIONS procedure (see section 8) are deleted. If the MAP procedure was called from the LOOK AROUND procedure step MP8 (see Fig. 22 and section 5) then the INTERCONNECT procedure step MP9 is called.

## 4. THE UNIQUE MAP PROCEDURE UMP

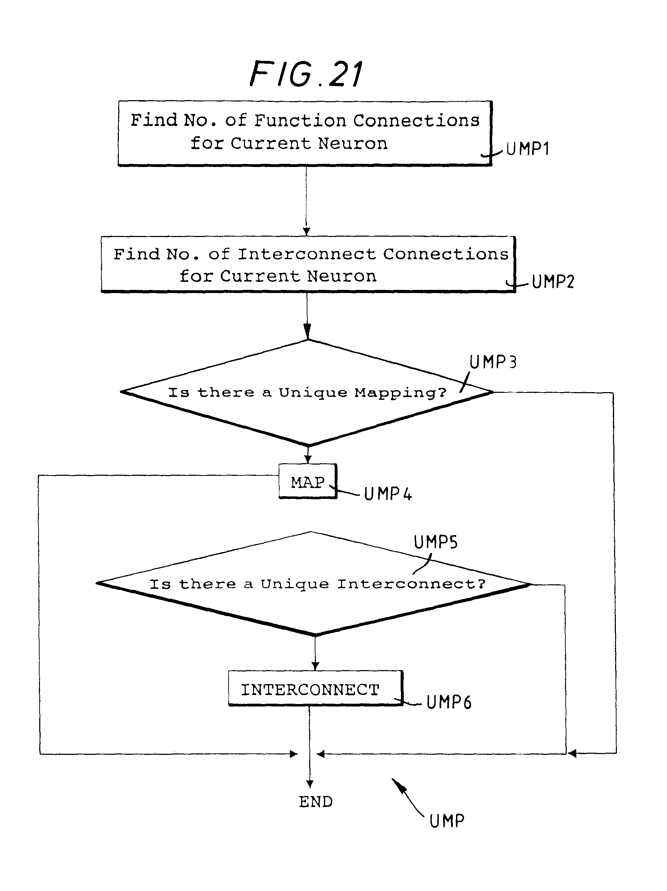

Fig. 21 shows this procedure and steps UMP1 and UMP2 are performed for the current nth layer neuron being analysed, the number of function and interconnect connections that have already been learnt for it are calculated. A unique function connection detected in step UMP3 causes the MAP procedure UMP4 (see Fig. 20 and section 3) to be called while a unique interconnect detected in step UMP5 causes the INTERCONNECT procedure (see Fig. 19 and section 2) to be called in step UMP6. It will never occur that a neuron has both a unique function and a unique interconnect connection (because then it would not be unique).

## 5. THE LOOK AROUND PROCEDURE LAP

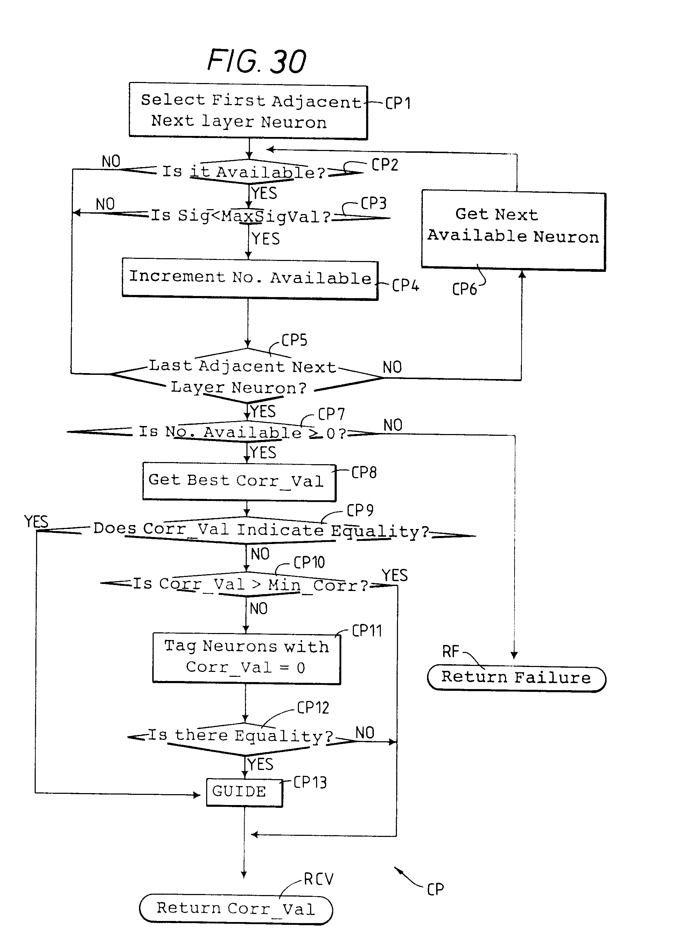

The look around procedure shown in Fig. 22 is called when a connection is sought for a specific nth layer neuron. It is preferable to implement a MAP. function if possible. If the significance of the nth layer neuron is less than "SigVal", it is required that at least two neurons map together, otherwise the minimum number of neurons required for mapping is specified by "in num". If the required number of neurons are available for mapping as identified in step LAP1 and more than one next layer neuron is available to act as a function neuron step LAP2 'yes', then the CORRELATE procedure step LAP3 (see Fig. 30 and section 13) is called. This procedure calculates, for each prospective next layer neuron, the correlation value that would be generated if the mapping to that neuron was implemented. CORRELATE returns either the Corr Val of the next layer neuron with the highest correlation value or an indication of failure tested for in step LAP4. If successful step LAP-4 'yes' the next layer target function neuron is identified to the MAP procedure in step LAP5 (see Fig. 20 and section 3). Note that, as with the MAP procedure, the CORRELATE procedure ensures that mappings are possible before calculating the correlation value. This ensures that MAP is only called when a best function neuron exists that satisfies the required number of inputs.

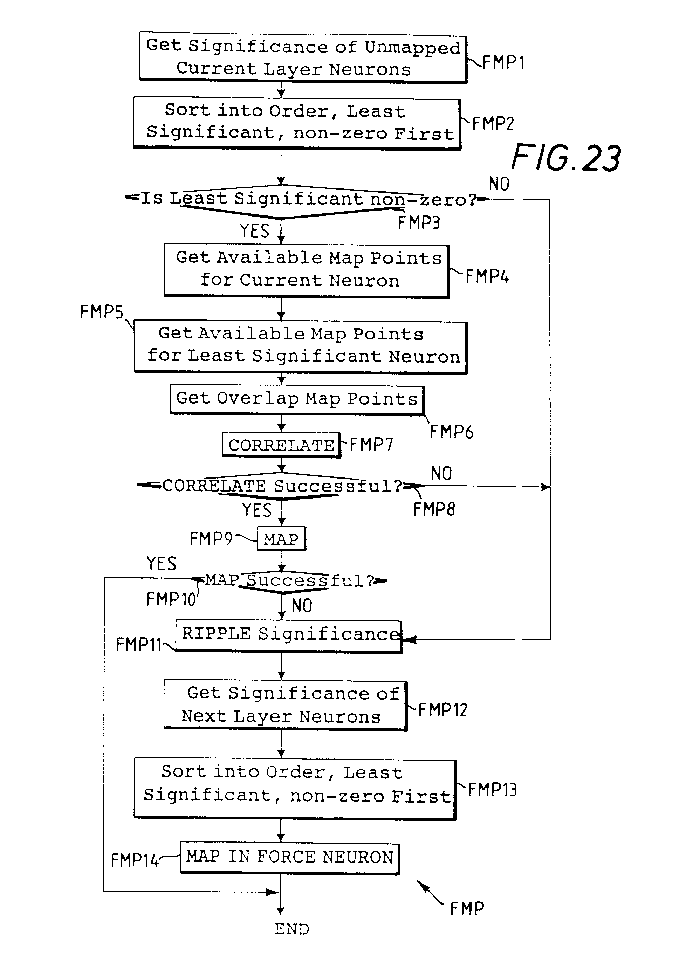

If it is not possible to perform a map function 'no' output from step LAP4 or 'no' from step LAP2, the current neuron is either forced to map as in num equals 2 detected in LAP6 or interconnected. If the significance of the current nth layer neuron is less than "SigVal" it is forced by the FORCE MAP procedure step LAP7 (see Fig. 23 and section 6), otherwise the INTERCONNECT procedure step LAP8 (Fig. 19) is called.

## 6. THE FORCE MAP PROCEDURE FMP

This procedure shown in Fig. 23 is called when the significance of an nth layer neuron is too low to allow it to be interconnected to the next layer. Initially it is desirable to perform a mapping function with another neuron in this layer.

All the adjacent neurons in the current layer are checked in steps FMP1 to FMP3 and, if any exist with non-zero significance, the neuron with the lowest non-zero significance is selected in step FMP4. The two neurons are then checked for available next layer function neurons in step FMP5 and those common to both tagged as available in step FMP6. The CORRELATE procedure (see Fig. 30 and section 13) is called in step FMP7 to determine the best next layer function neuron and, if successful FMP8 = yes, MAP is called to execute the Forced Map procedure in Fig. 23.

If no adjacent neurons exist in the current layer step FMP3 'no', or the CORRELATE step FMP8 no or MAP procedure was unsuccessful step FMP10 no, the current neuron must be forced in step FMP11 into a next layer neuron that has just learnt a function or interconnect for the current layer. The significance of the next layer available neurons are calculated in step FMP12 and the neurons sorted into order of lowest non-zero significance first in step FMP13. The MAP IN FORCE NEURON procedure (see Fig. 24 and section 7) is then called in step FMP14.

## 7. THE MAP IN FORCED NEURON PROCEDURE MIFNP. Fig. 24

Provided an available next layer non-zero significance neuron exists as detected in MIFNP1 and the mapping function would not violate the "MaxSigVal" parameter as detected in step MIFNP2, the mapping is defined in step MIFNP3. All array parameters affected by the connections are updated in step MIFNP4 and the correlation value determined via the CORRNUM procedure (see Fig. 31 and section 14). The weight UPDATE procedure (see Fig. 28 and section 11) is then executed in step MIFNP5. It must be noted at this point that the previous function or interconnect learnt by the next layer neuron into which this neuron is being forced is now obsolete. As a result, the last weight page generated for the n+1th layer neuron is overwritten.

## 8. THE RECORD CONNECTIONS PROCEDURE RCP. Fig. 25

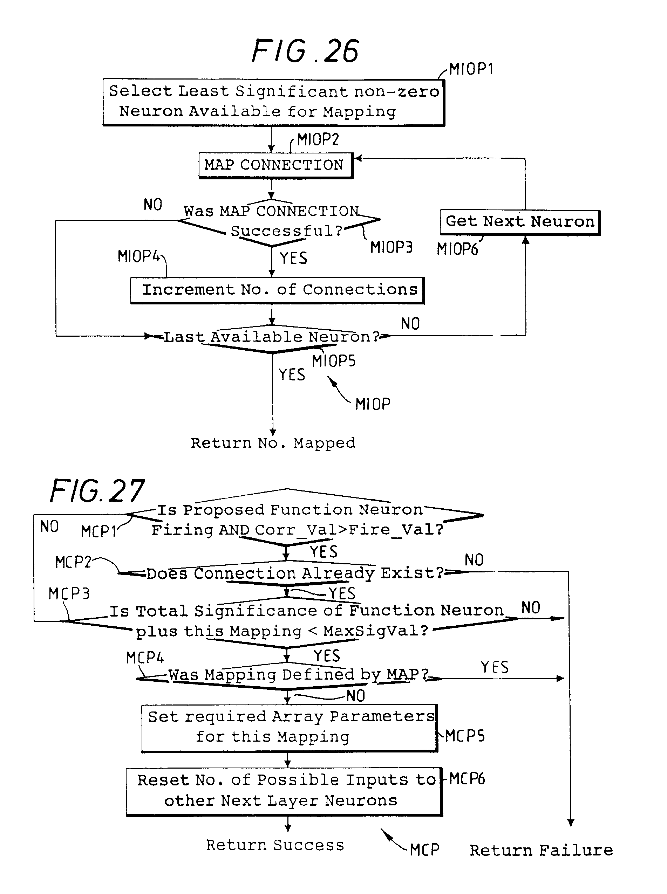

The purpose of this procedure is to connect current layer neurons to a next layer function neuron without violating the "MaxSigVal" parameter. Since the next layer neuron has already been identified, the nine possible input neurons identified in step RCP1 from the current layer are sorted into order of lowest non-zero significance first in step RCP2. The neurons are then mapped in order via the MAP IN ORDER procedure in step RCP3 (see Fig. 26 and section 9) until either no more are available or the significance limit is reached. It should be noted that the calling MAP procedure will have already defined the current nth layer neuron, which initiated the whole process, as already connected to the identified function neuron. RECORD CONNECTIONS returns to MAP the number of successfully connected neurons in step RCP4.

## 9. THE MAP IN ORDER PROCEDURE MIOP. Fig. 26

The current layer neurons available for interconnect are selected in order, lowest non-zero significance first in step MIOP1. The MAP CONNECTION procedure (see Fig. 27 and section 10) is called in step MIOP2 and returns a '1' if successful detected in step MIOP3. The number of successful connections is then incremented in steps MIOP4, MIOP5 and MIOP6 for return to the RECORD CONNECTIONS procedure (see Fig. 25 and section 8).

## 10. THE MAP CONNECTION PROCEDURE MCP. Fig. 27

Map Connection distinguishes between calls to the MAP procedure (see Fig. 20 and section 3) which are either trying to determine if a connection has already been learnt or if a new connection is valid in steps MCP1, MCP2 and MCP3.

The next layer function neuron is checked first in step MCP1. If it is firing and the correlation value is greater than "fire val", then the MAP procedure was called from "train a layer" stage 1. If a connection does not already exist as detected in step MCP2 failure must be reported to the calling procedure.

If either an existing connection has been identified step MCP2 'yes' or a new one is to be learnt step MCP-1 'no' the significance is checked for validity in step MCP3. That the mapping has not already been defined by the MAP procedure is also checked in step MCP4. The current layer neuron is then defined as connected to the next layer function neuron, associated parameters updated in steps MCP5 and MCP6 and success='1' returned to MAP IN ORDER.

## 11. THE UPDATE PROCEDURE. UP

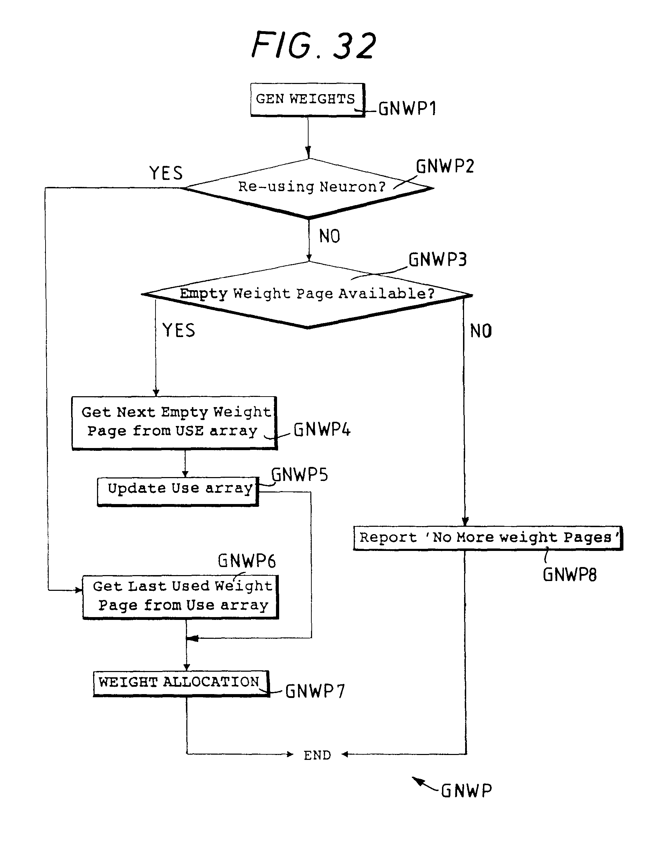

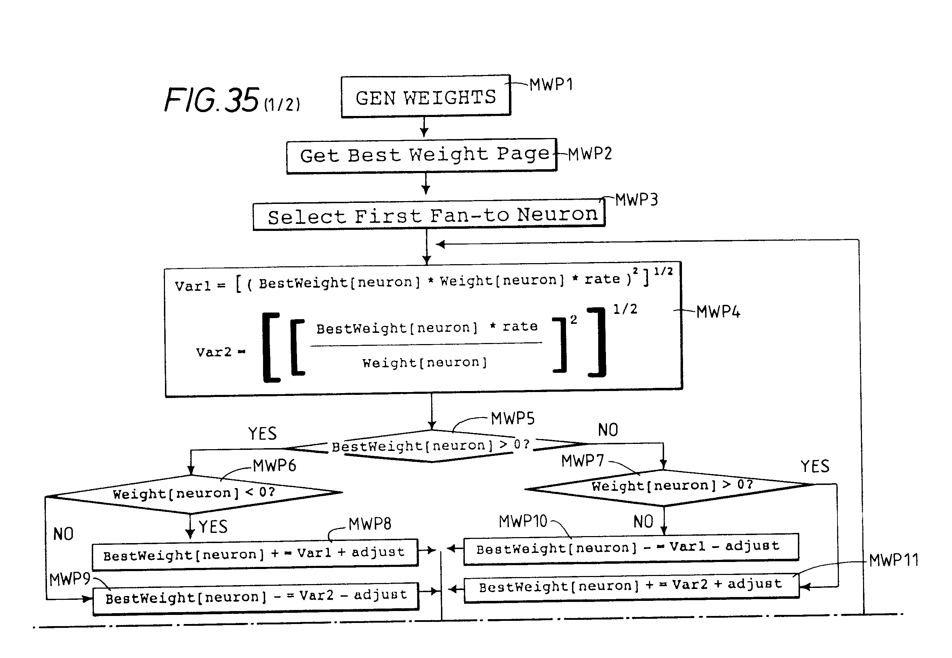

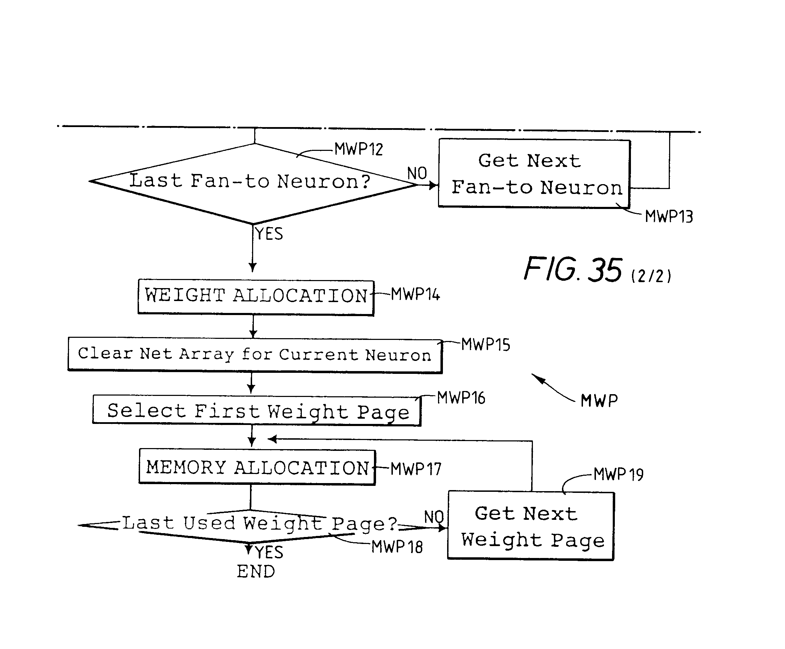

The Update procedure shown in Fig. 28 determines whether weight modifications are required. If a pattern has been recognised with a sufficiently high correlation value no weight update is required 'yes' route from step UP1. If the correlation value is less than "fire val" ('no' from step UP1) but greater than "weak fire val" ('yes from step UP2) then weights are generated for the current sub-pattern in step UP3 but merged with the next existing weight page via the MERGE WEIGHTS procedure (see Fig. 35 and section 18). If the correlation value is not high enough 'no' output from step UP2 then a new page of weights is generated in step UP4 via the GEN NEW WEIGHT PAGE procedure (see Fig. 32 and section 15). The option of two update functions through step UP5 is important.

If, like back propagation, only a merge weight facility existed, wildly erroneous data would greatly affect the weight distribution and reduce the performance of the system. If however, only new weight pages were generated, many weight pages would be representing very similar patterns and the system would rapidly run out of memory. Since the user defines the parameters "fire val" and "weak fire val", the classification boundaries can be set at will and, with the two update options, provide a greater degree of flexibility.

## 12. THE GUIDE PROCEDURE GP.

The Guide procedure shown in Fig. 29 is called for a specific current layer neuron when the best connection point is being sought. Initially the next layer nodes available for connection are determined in step GP2 (these were initially defined by the Build Table function in step TAL1). The Get Best Node function step GP2 analyses the available nodes with reference to the target output node (last layer output) and determines, in order of preference, which of the next layer nodes would provide the best connection path. Once identified the nodes are assessed in order:-

1. If the Best Node is not already used as a function 'no' from step GP3 or interconnect neuron it may be used now.
2. If the current pattern is not of a new pattern class 'no' step GP4 or the current neuron is to be interconnected to an Interconnect Best Node step GP5 'yes' (i.e. GUIDE called from INTERCONNECT and Best Node already defined as an interconnect neuron), or The current neuron is to be mapped to a function Best Node step GP6 (i.e. GUIDE called from CORRELATE and Best Node is already defined as a Function Node) then:-

    (a) check to see if the Best Node is already connected to the current neuron step GP7. If so, it may be used again now.

    (b) If the Best Node is already connected directly to the target output node (defined by Check Connection on a previous call to the Learn procedure), the significance is less than "MaxSigVal", the Best Node is not already firing and not already mapped then it may be used using steps GP8 and GP9.

3. If each of the above failed step GP9 'no' route for all the available neurons step GP11 then check to see if a map or interconnect function previously learnt by this layer can be accessed in step GP13. This is analogous to the FORCE MAP procedure (section 6) but now the significance rule can be violated (i.e.

significance can be greater than "MaxSigVal").

4. If none of the above produced a connection point report a "Failed to Map error" GPF.

Guide returns to its calling procedure an indicator of success GPS and, if successful, identifies the next layer node for connection.

### 13. THE CORRELATE PROCEDURE CP. Fig. 30

Each of the nine next layer adjacent neurons are checked for availability and significance with a view to providing a connection point for the current nth layer neuron using the loop of steps CP1, CP2 or CP3 and CP4 to CP5 and CP6 returning to CP2 . If no neurons are found to be available, failure RF is returned in step CP7.

The available neurons are evaluated to find the best correlation value in step CP8. If equality is obtained (two or more neurons have the same best correlation value) as defined by step CP9 to CP12 GUIDE is called in step CP13 to determine the best neuron and the correlation value of that 'guided' neuron RCV returned by CORRELATE.

If a best correlation value RCV is found it is checked to ensure that it is above the minimum correlation value "Min Corr" (User Defined) in step CP10. This is important if for example, a neuron that has learnt a sub-pattern of 3 neurons and if one of those 3 neurons and were active and the other 2 were off ('0'), a small correlation value would be produced. It is not desirable to use the neuron with this low correlation value as it effectively would be forced to learn a new representation of an existing sub-pattern. Since the new sub Pattern is probably unrelated to the existing one, this effect would be detrimental to the system.

If the best correlation value is not above the "Min Corr" value step CP10 'no' then only those neurons that gave zero correlation as defined by step CP11 are considered further. If equality is obtained step CP-12 'yes' (more than one neuron with zero correlation) GUIDE is called in step CP13 to determine the next neuron. Hence CORRELATE identifies the best prospective function neuron and returns its correlation value "Corr Val" RCV.

### 14. THE CORRNUM PROCEDURE CMP.

The Corrnum procedure shown in Fig. 31 calculates the correlation value for each page of weights stored by the neuron using steps CMP1 to CMP13. The best correlation value is then returned after determination in step CMP14.

For each page of weights updated by step CMP13, the steps CMP2 to CMP9 'yes', CMP12 'no' are performed, the correlation value is determined in step CMP10, by multiplying the stored weights and the current significance values of the active layer. Note that this process will distinguish between identical bit patterns that have different significances.

### 15. THE GEN NEW WEIGHT PAGE PROCEDURE GNWP

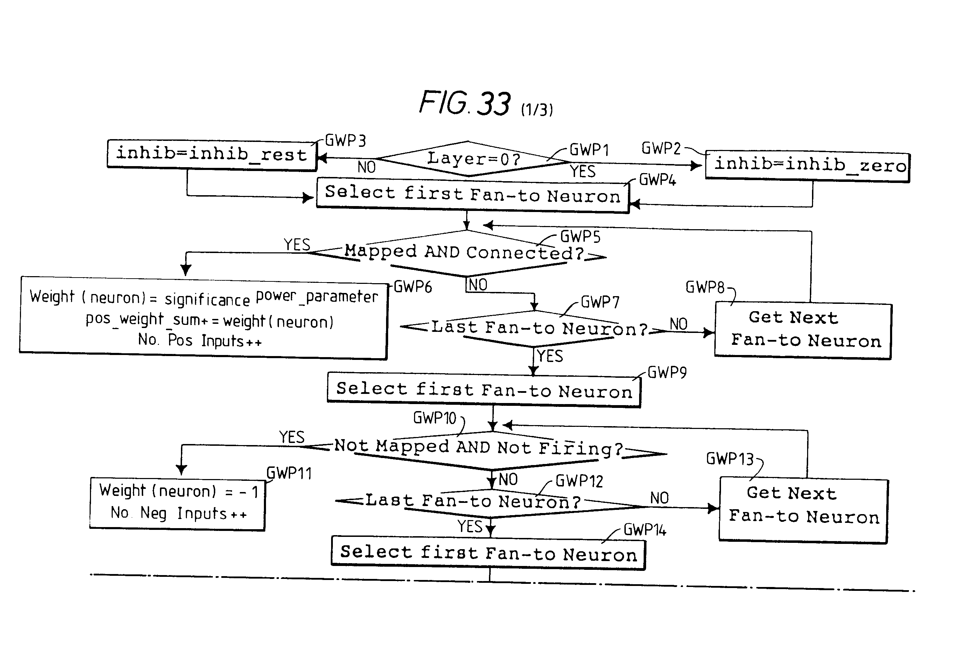

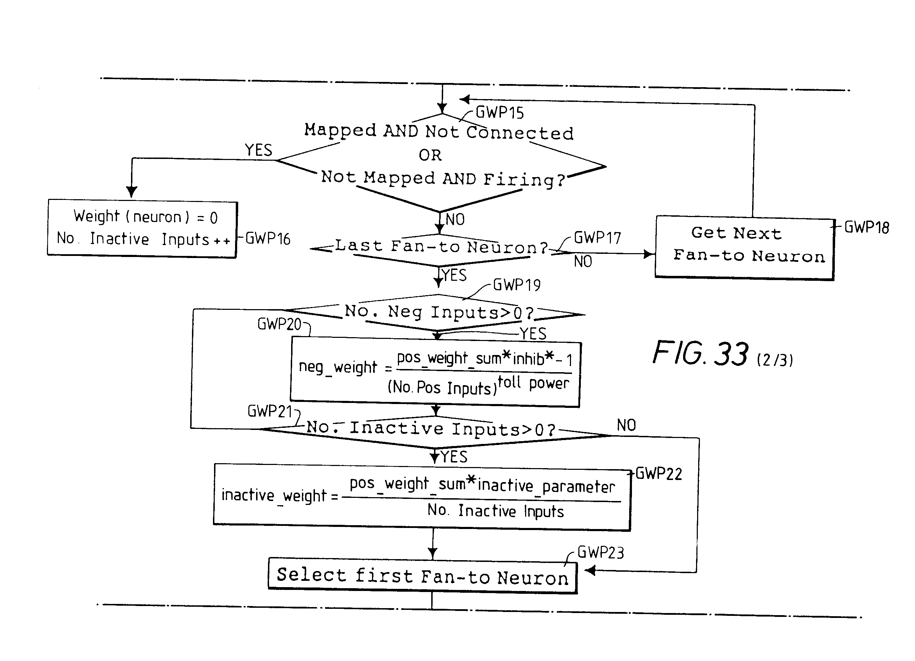

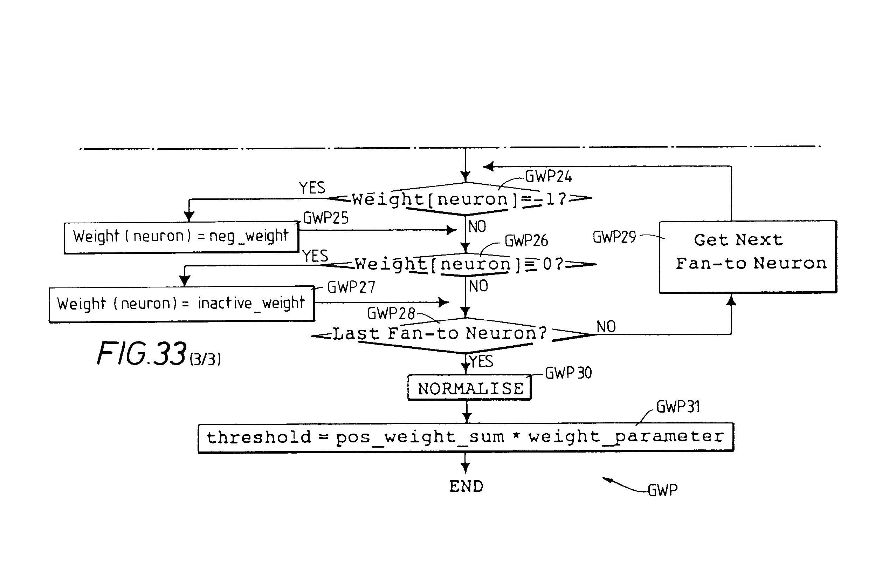

The Generate New Weights procedure shown in Fig. 32 generates a page of weights for a given target neuron (neuron in layer n+1 learning mapping from fan-in neurons in layer n). The weights are generated in steps GNWP1 by GENERATE WEIGHTS procedure (see Fig. 33 and section 16). A check is then made in step GNWP2 to see that (i) a new weight page is actually required and (ii) that a spare weight page exists 'yes' from step GNWP3. The 're-use' check of step GNWP2 ensures that a neuron is not being re-used during execution of the TRAIN LAYER procedure. Re-use can occur when a forced mapping is implemented. If a current layer neuron is forced into a next layer neuron that has already learnt a mapping during the training of this current layer then the existing weight page must be re-used. The USE array involving steps GNWP4 and GNWP5 stores, for each neuron, the number of weight pages that have been allocated (the "useptr" always points to the next empty weight page). In the case of re-use the last weight page must be re-evaluated.

Since there is a limit on the total number of weight pages allowed (user defined) a check must be made to ensure that they have not all been used in step CNWP3. If empty weight pages exist the current page number, "last num", is set from "useptr" and "useptr dated". WEIGHT ALLOCATION in step GNWP7 is then executed. If no empty weight pages exist the user is informed in step GNWP8.

### 16. THE GENERATE WEIGHTS PROCEDURE GNP. Fig. 33

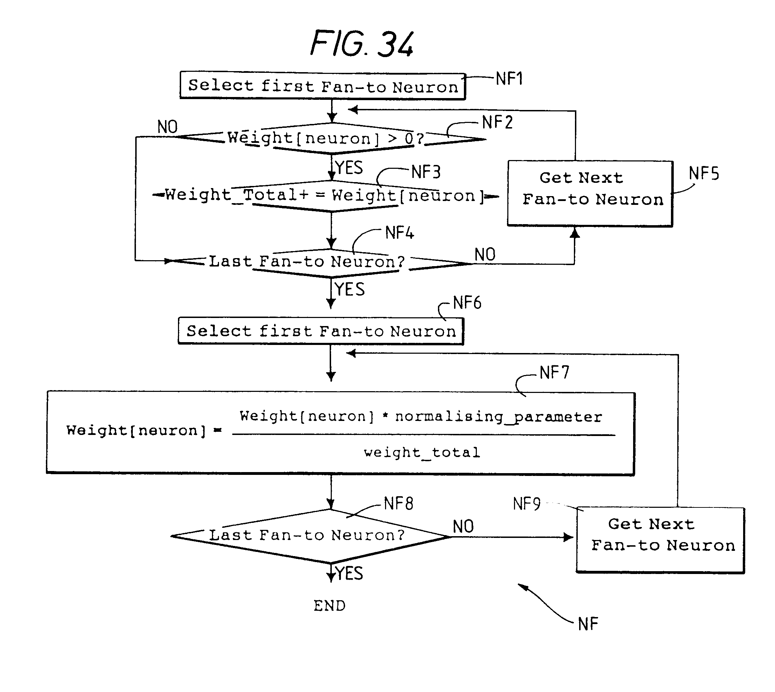

Since, in general, the input layer detailed in step GWP1 has far fewer inactive ('0') neurons than any other layer, it has its own inhibitory parameter, "inhib zero" set in step GWP2. All other layers operate on the inhibitory parameter "inhib rest" set in step GWP3. The neuron for which the weights are being generated (the target neuron) selected in step GWP4 has 9 possible fan-in points and thus 9 weights. The 9 fan-to neurons are first checked to see if they are mapped and connected in step GWP5 to the target neuron. If this is so step GWP6 is performed and a positive weight is generated. Once all the fan-to neurons have been checked for positive connections around the loop of steps GWP5, GWP7 and GWP8 they are re-interrogated for negative connections around the loop of steps GWP10, GWP12 and GWP13. For any fan-to neuron that is not mapped and not firing 'yes' output from step GWP10 a negative weight is generated in step GWP11. Finally the fan-to neurons are checked around the loop of steps GWP15, GWP17 and GWP18 for inactive connections. Any neuron that is mapped but not connected or not mapped and firing is assigned an inactive weight in step GWP16. Negative and inactive weight values are then calculated using steps GWP19 to GWP29. Once all the connections have been identified 'yes' output from step GWP28 the weights are normalised in step GWP30 using the NORMALISE function as shown in Fig. 34. Finally, a threshold value is calculated in step GWP31. Note that all weight values are dependent upon user defined parameters.

## 17. THE WEIGHT ALLOCATION PROCEDURE WAP.

The Weight Allocation Procedure simply stores the weight values produced by the GENERATE WEIGHTS procedure (see Fig. 33 and section 16) or the MERGE WEIGHTS procedure (see Fig. 35 and section 18) in a global weight array pointed to by "wgtptr". Each neuron has a number of weight pages and each weight page stores the 9 fan-in weight values and the threshold value generated by the calling procedure.

## 18. THE MERGE WEIGHTS PROCEDURE MWP.

The merge weights procedure Fig. 35 allows an existing weight page to be merged with a new weight page. This is required when the current mapping being learnt is similar to one already learnt. The degree of similarity is defined by the correlation value. If the correlation value is less than "fire val" (good correlation) but greater than "weak fire val" (poor correlation) then merging occurs.

Initially the GENERATE WEIGHTS procedure (see Fig. 33 and section 16) is called in step MWP1 to generate a new set of weights for the current mappings to be learnt by the target neuron. The best page of weights selected in step MWP2 (BestWeight[neuron]) stored by the target neuron (i.e. the page of weights that gave the best correlation value for this mapping) are then modified by the newly generated weights (weights [neuron]) using steps MWP5 to MWP13 and the WEIGHT ALLOCATION procedure in step MWP14 (see Fig. 34 and section 17) is executed to store the new values. Since the weights have been modified the Net Array must also be modified. The easiest way to achieve this is to clear the Net Array in step MWP15 for the current target neuron select the first weight page in step MWP16 and call the MEMORY ALLOCATION procedure step MWP17 (section 19) for each page of weights using steps MWP18 and MWP19 stored by the target neuron.

## 19. THE MEMORY ALLOCATION PROCEDURE MAP

The Memory Allocation procedure shown in Fig. 36 allocates positive or negative values to the NET array (pointed to by "netptr") to indicate where fan-in patterns correlate well (positive values) or badly (negative values). The positive and negative values themselves are used for evaluation purposes and place no limit on the implementation of the neuron as a binary SRAM. Since the NET array is initially set to zero prior to any network training, a zero value simply indicates that no information is known. In practice this is the same as a negative value. Thus positive values = '1' = recognised, negative and zero values = '0' = unrecognised.

The weights of each of the 9 fan-in neurons in the current weight page (given by the USE array) are retrieved from storage in step MAP1 along with the corresponding threshold value. Nine fan-in neurons provide $2^9 = 512$ address locations for memory. For each address 0 to 511 an activation level is calculated in the loop of steps MAP3, MAP4, MAP5, MAP6 and MAP7. For the particular address the weight corresponding to neuron active ('1') positions are summed. For example, address 468 = 1 1 1 0 1 0 1 0 0 so the activation level for this address is

$$\text{Activation} = \text{weight}[9] + \text{weight}[8] + \text{weight}[7] + \text{weight}[5] + \text{weight}[3]$$

If the activation level is greater than the threshold level as detected in step MAP8, it is defined that the target neuron would recognise the mapping giving that address and a positive value is stored in the NET array by step MAP9. The value stored relates to the weight page so that, during evaluation, the setting can be traced back to a particular learn process. If the NET array was already empty and the activation level modified by the page parameter (user defined) is greater than the threshold value as detected in step MAP10, a negative value is stored in step MAP11 indicating lack of correlation. Note that negative values never overwrite positive values though the reverse is true. This ensures that, once learnt, a pattern is not 'forgotten'. The merge weights facility will allow modification if the original pattern was particularly noisy. The above process is performed for each mapping around the loop created by steps MAP12 and MAP13.

## 20. THE RIPPLE SIGNIFICANCE PROCEDURE RSP.

The Ripple Significance procedure used in steps TAL13 and TL35 for example simply sums the significance of fan-in neurons to a particular next layer target neuron. Only those fan-in neurons that are actually connected to the target have their significance added in. Thus the significance of the target is the sum of the input significances and this ensures that, unless a 'failed to map' error is reported, the significance of the output target neuron (last layer target) is the sum of the significances of the input layer firing neurons.

## 21. THE RECALL LAYER PROCEDURE RLP. Fig. 37

Each neuron in the layer selected sequentially by step RLP10 has its input mappings analysed to produce an address to the NET array each time this procedure is entered. Any of the nine fan-in neurons that are firing (whether connected or not) provide a '1' in the address at the corresponding bit. The NET array is then interrogated at step RLP4 at the address specified for the target if defined as firing. If a zero or negative value is stored in the NET array, the target neuron is off as defined in step RLP8.

## TRAINING ALGORITHM SUMMARY.

From the above it can be seen that the neural network according to the invention is trained by firstly identifying the target neuron and hence the allowable interconnection paths. Each input neuron in the '1' state is defined to have a significance value, arbitrarily set to 10, all other neurons have zero significance. Three types of connection exist (i) positive connections (ii) negative connections (iii) inactive connections.

Positive Connections are made from '1' state nth layer neurons to the n+1th layer neuron. Similarly, negative connections are made from '0' state nth layer neurons to the n+1th layer neuron. An inactive connection occurs when an nth layer neuron is active (logic '1') but is not part of the interconnection path for the pattern being learnt.

A positive weight is assigned to the positive connection by multiplying the significance of the connecting '1' neuron by a positive weighting parameter. The negative weights are determined by summing the positive weights from all the positive connections to the neuron and multiplying by a negative weighting parameter. This is normalised in accordance with the number of negative inputs to the neuron. Similarly, the inactive weights are determined by summing the positive weights, multiplying by the inactive weighting parameter and normalising in accordance with the number of inactive inputs to the neuron. All weight parameters are user defined. Neuron weights are stored in weight pages. It should be noted that the training algorithm allows a neuron in layer n to connect itself to any available neuron in layer n+1.

Once connections have been made, the significance of an n+1th layer neuron is the sum of the significances of the nth layer neurons connected to it.

Once all the nth layer neurons have been connected, the n+1th layer neuron firing values are calculated. This is termed recall and is the same process that is used when testing the performance of the network. The nth layer neurons provide addresses to the n+1th layer neuron and these address locations are interrogated. Firing values are set as follows:-

if stored value > 0, Fire Value =-1
if stored value = 0, Fire Value = 0
if stored value > 1, Fire Value = 1
if stored value > 10, Fire Value = 2

The values 0 and -1 represent an inactive '0' neuron state while both '1' and '2' represent an active '1' neuron. The two active firing values are used to determine the operation of the weight pages.

The weights associated with each neuron are stored in weight pages. When a new pattern is learnt by the network it first checks to see if the new pattern is similar to those it has already learnt. This is achieved by running the network in recall mode. The input pattern flows through the network activating next layer neurons until it reaches the output layer, at which point the target may or may not fire. The training algorithm then steps through the network, starting with the input layer. If no next layer neurons are firing (firing values of 0 or -1), interconnections must be learnt and a new page of weights stored. If a next layer neuron is firing with a value of 1 it is defined as firing weakly. This indicates an input pattern which either noisy or incomplete but weakly recognised. The network responds by Merging Weights, that is, updating an existing weight page to accommodate the noisy pattern and thus updating the values stored at the neuron memory addresses. If a next layer neuron is firing with a value of 2 it is defined as firing strongly. The input pattern has been recognised and no weight or neuron memory update is required.

Once the network has learnt the required patterns, it can be tested in recall mode. The input layer is set to the pattern that is to be identified and the active neurons address the next layer. The addresses specified by the input layer neurons are interrogated and the next layer neuron firing values set to the value stored in memory. This process repeats for each layer until the output layer is reached. If no output layer neurons have fired then the pattern has not been recognised. If a single output neuron fires then the input belongs to the class of patterns associated with that output. If two or more output neurons fire then the input has been classified as belonging to more than one class. This in itself can be a useful function since it allows sets and subsets to be detected by the neural network.

## EXAMPLE CELL CONFIGURATION

| | X1 | X2 | X3 | X4 | X5 | THRESHOLD | =8 |
|---|---|---|---|---|---|---|---|
| | -5 | 20 | -10 | 4 | 16 | VALUE | FIRE |
| 0 | 0 | 0 | 0 | 0 | 0 | 0 | N |
| 1 | 0 | 0 | 0 | 0 | 1 | 16 | Y |
| 2 | 0 | 0 | 0 | 1 | 0 | 4 | N |
| 3 | 0 | 0 | 0 | 1 | 1 | 20 | Y |
| 4 | 0 | 0 | 1 | 0 | 0 | -10 | N |
| 5 | 0 | 0 | 1 | 0 | 1 | 6 | N |
| 6 | 0 | 0 | 1 | 1 | 0 | -6 | N |
| 7 | 0 | 0 | 1 | 1 | 1 | 10 | Y |
| 8 | 0 | 1 | 0 | 0 | 0 | 20 | Y |
| 9 | 0 | 1 | 0 | 0 | 1 | 36 | Y |
| 10 | 0 | 1 | 0 | 1 | 0 | 24 | Y |
| 11 | 0 | 1 | 0 | 1 | 1 | 40 | Y |
| 12 | 0 | 1 | 1 | 0 | 0 | 10 | Y |
| 13 | 0 | 1 | 1 | 0 | 1 | 26 | Y |
| 14 | 0 | 1 | 1 | 1 | 0 | 14 | Y |
| 15 | 0 | 1 | 1 | 1 | 1 | 30 | Y |
| 16 | 1 | 0 | 0 | 0 | 0 | -5 | N |
| 17 | 1 | 0 | 0 | 0 | 1 | 11 | Y |
| 18 | 1 | 0 | 0 | 1 | 0 | -1 | N |
| 19 | 1 | 0 | 0 | 1 | 1 | 15 | Y |
| 20 | 1 | 0 | 1 | 0 | 0 | -15 | N |
| 21 | 1 | 0 | 1 | 0 | 1 | 1 | N |
| 22 | 1 | 0 | 1 | 1 | 0 | -11 | N |
| 23 | 1 | 0 | 1 | 1 | 1 | 5 | N |
| 24 | 1 | 1 | 0 | 0 | 0 | 5 | N |
| 25 | 1 | 1 | 0 | 0 | 1 | 31 | Y |
| 26 | 1 | 1 | 0 | 1 | 0 | 19 | Y |
| 27 | 1 | 1 | 0 | 1 | 1 | 25 | Y |
| 28 | 1 | 1 | 1 | 0 | 0 | 5 | N |
| 29 | 1 | 1 | 1 | 0 | 1 | 21 | Y |
| 30 | 1 | 1 | 1 | 1 | 0 | 9 | Y |
| 31 | 1 | 1 | 1 | 1 | 1 | 25 | Y |

5 Input Configuration
Single Identity Neuron

Table 1

EXAMPLE CELL
CONFIGURATION

| | X1 | X2 | X3 | X4 | X5 | THRESHOLD | =10 |
|---|---|---|---|---|---|---|---|
| | 4 | 16 | -5 | 18 | -12 | VALUE | FIRE |
| 0 | 0 | 0 | 0 | 0 | 0 | 0 | N |
| 1 | 0 | 0 | 0 | 0 | 1 | -12 | N |
| 2 | 0 | 0 | 0 | 1 | 0 | 18 | N |
| 3 | 0 | 0 | 0 | 1 | 1 | 6 | N |
| 4 | 0 | 0 | ' | 0 | 0 | -5 | N |
| 5 | 0 | 0 | 1 | 0 | 1 | -17 | N |
| 6 | 0 | 0 | 1 | 1 | 0 | 13 | Y |
| 7 | 0 | 0 | 1 | 1 | 1 | 1 | N |
| | 3 | -5 | 20 | 1 | 2 | VALUE | FIRE |
| 8 | 0 | 1 | 0 | 0 | 0 | -5 | N |
| 9 | 0 | 1 | 0 | 0 | 1 | -3 | N |
| 10 | 0 | 1 | 0 | 1 | 0 | -4 | N |
| 11 | 0 | 1 | 0 | 1 | 1 | -2 | N |
| 12 | 0 | 1 | 1 | 0 | 0 | 15 | Y |
| 13 | 0 | 1 | 1 | 0 | 1 | 17 | Y |
| 14 | 0 | 1 | 1 | 1 | 0 | 16 | Y |
| 15 | 0 | 1 | 1 | 1 | 1 | 18 | Y |
| | 4 | 16 | -5 | 18 | -12 | VALUE | FIRE |
| 16 | 1 | 0 | 0 | 0 | 0 | 4 | N |
| 17 | 1 | 0 | 0 | 0 | 1 | -8 | N |
| 18 | 1 | 0 | 0 | 1 | 0 | 22 | Y |
| 19 | 1 | 0 | 0 | 1 | 1 | 10 | Y |
| 20 | 1 | 0 | 1 | 0 | 0 | -1 | N |
| 21 | 1 | 0 | 1 | 0 | 1 | -13 | N |
| 22 | 1 | 0 | 1 | 1 | 0 | 17 | Y |
| 23 | 1 | 0 | 1 | 1 | 1 | 5 | N |
| | 15 | -21 | -28 | 30 | 10 | VALUE | FIRE |
| 24 | 1 | 1 | 0 | 0 | 0 | -6 | N |
| 25 | 1 | 1 | 0 | 0 | 1 | 4 | N |
| 26 | 1 | 1 | 0 | 1 | 0 | 24 | Y |
| 27 | 1 | 1 | 0 | 1 | 1 | 34 | Y |
| 28 | 1 | 1 | 1 | 0 | 0 | -34 | N |
| 29 | 1 | 1 | 1 | 0 | 1 | -24 | N |
| 30 | 1 | 1 | 1 | 1 | 0 | 4 | N |
| 31 | 1 | 1 | 1 | 1 | 1 | 6 | N |

5 Input Configuration
Multiple Identity Neuron

Table. 2

Table 3 Operating Modes

| | | Minerva Operating Modes | | | | |
|---|---|---|---|---|---|---|
| Mode | Cycle Time | Function | Comms | Inputs | Outputs | Inter Chip |
| 1 | 75 n sec | Single Chip Serial | I/O only | 3 x 64 Bits | 3 x 64 Bits | |
| 2 | 75 n sec | Single Chip Parallel | I/O only | 3 x 64 Bits | 3 x 64 Bits | |
| 3 | 200 nsec | Multi Chip Serial | I/O & Network Edges | 8 x 22 Bits | 8 x 22 Bits | 8 x 85 Bits |
| 4 | 200 nsec | Multi Chip Parallel | I/O & Network Edges | 8 x 22 Bits | 8 x 22 Bits | 8 x 85 Bits |
| 5 | 878 usec | Train Network | Weight Up-date | 35 152 x 32 Bits | | |

| | X1 | X2 | X3 | X4 | X5 | THRESHOLD | = 10 |
|---|---|---|---|---|---|---|---|
| | 4 | 16 | -5 | 18 | -12 | VALUE | FIRE |
| 0 | 0 | 0 | 0 | 0 | 0 | 0 | N |
| 1 | 0 | 0 | 0 | 0 | 1 | -12 | N |
| 2 | 0 | 0 | 0 | 1 | 0 | 18 | N |
| 3 | 0 | 0 | 0 | 1 | 1 | 6 | N |
| 4 | 0 | 0 | 1 | 0 | 0 | -5 | N |
| 5 | 0 | 0 | 1 | 0 | 1 | -17 | N |
| 6 | 0 | 0 | 1 | 1 | 0 | 13 | Y |
| 7 | 0 | 0 | 1 | 1 | 1 | 1 | N |
| | 3 | -5 | 20 | 1 | 2 | VALUE | FIRE |
| 8 | 0 | 1 | 0 | 0 | 0 | -5 | N |
| 9 | 0 | 1 | 0 | 0 | 1 | -3 | N |
| 10 | 0 | 1 | 0 | 1 | 0 | -4 | N |
| 11 | 0 | 1 | 0 | 1 | 1 | -2 | N |
| 12 | 0 | 1 | 1 | 0 | 0 | 15 | Y |
| 13 | 0 | 1 | 1 | 0 | 1 | 17 | Y |
| 14 | 0 | 1 | 1 | 1 | 0 | 18 | |
| 15 | 0 | 1 | 1 | 1 | | | |
| | 4 | 16 | | | | | |
| 216 | | | | | | | |

WP

Table 4 Weight Page

## Claims

1. A digital neuron for use in a neural network, the digital neuron comprising a random access memory having $2^n$ locations, one for each n input code pattern, each location being programmed wits the neuron firing state (on or off) corresponding to the synaptic weights allocated to the input code pattern for that neuron in a neural network by a neural network training algorithm, the neuron operating as a look-up table device deriving the neuron firing state for each n bit digital code pattern presented at the neuron input paths from the random access memory location addressed by the n bit digital input code pattern.

2. A digital neuron according to claim 1 in which the training algorithm stores the neuron memory weight map separately from the neuron firing states which are programmed into the neuron random access memory.

3. A digital neuron according to claims 1 or 2 in which the digital neuron is programmed to perform either a correlation function or an interconnect function for each specific input code combination.

4. A digital neuron according to claim 3 in which the training algorithm divides the memory weight map into weight pages and each neuron random access memory is similarly programmed with corresponding firing state weight pages, thereby permitting a neuron to act either as a correlation device or as an interconnect device depending upon the input code combinations applied as the memory address to the neuron.

5. A digital neural network including digital neurons having n input connections and a random access memory having $2^n$ locations, one for each possible digital combination of input connection states, storing the firing state of the neuron corresponding to the synaptic weight allocated to the input connection states and in which the neural network is multi-layer and the output of each neuron in the network is connected to the input path of a limited number of neighbouring neurons in the next layer of the network.

6. A digital neural network according to claim 5 in which the output of each neuron is connected to an input path of the corresponding neuron in the next layer and an input path of the neurons located immediately above and below the corresponding neuron in said next layer if any, each input path to the network being similarly connected to an input path of the corresponding neuron in the input layer and an input path of the neurons immediately above and below the corresponding neuron if any in the input layer.

7. A digital neural network according to claim 6 in which some of the neurons share a proportion rf their input connections with other neurons of the same layer.

8. A digital neural network according to claims 5, 6 or 7 which is constructed using a modular three dimensional cubic array having each axis of equal size, each digital neuron having nine input paths and digital neurons are connected together so that each neuron connects to the outputs of the three neurons above, below and corresponding in the preceding layer.

9. A digital neural network according to claim 8 in which a number of modules can be interconnected to form a larger network.

10. A digital neural network according to claim 9 in which the neurons and each cubic array are fabricated using integrated circuit techniques.

11. A method of training a digital neural network, the network comprising a plurality of neurons interconnected in a regular pattern in a multi-layer arrangement the input layer being connected to the digital input paths to the network the method involving the application of the patterns to be recognised by the network as a single pass without an iteration process.

12. A method as claimed in claim 11 in which synaptic weights are set substantially in accordance with the significance of the information flowing to each synaptic weight.

13. A method as claimed in claim 12 in which the input patterns are applied to a simulation of the network interconnection arrangements and only inputs with positive (1) values are processed to identify neurons that lie on a path to the designated output.

14. A method as claimed in claim 13 in which a training algorithm connects the network input path neuron-by-neuron through the simulated network until it reaches all of the target outputs, at each stage one neuron out of the possible fan-to-points is interrogated to ascertain if a neuron has already learnt the required functions, in the absence of a neuron having already learnt the required function adjacent neurons are interrogated to establish the spare capacity for each neuron and the neuron having the most spare capacity is programmed to implement the required function.

15. A method as claimed in claim 14 in which each neuron in the simulated network is programmed with the synaptic weights for the correlation functions to be performed for the specific input pattern as defined by the training algorithm and when a neuron is to be mapped into a new function a new page of weights is generated by the training algorithm.

16. A method as claimed in claim 15 in which each neuron contains multiple pages of firing states enabling each neuron to represent any function of its inputs, during training a new page of weights is calculated and a new firing state page is introduced if none of the neurons fire on the path to the output neuron, the least utilised neuron is assigned the new weights and the length of the weight page is determined by the complexity of the inputs to the designated neuron.

17. A method according to claim 16 in which the training algorithm constrains the connections in the network so that:

(i) a neuron may be either an interconnect or a functional neuron, never both,

(ii) connections should be made in the direction of the output target neuron,

(iii) a neuron may have only one active output connection to the next layer, input connections and weights are defined as an active connected neuron (positive weight), an active unconnected neuron (inactive weight) and an inactive neuron (negative weight),

(iv) a correlation value is used to check if sub-patterns already learnt are present in the current pattern, if the correlation is high enough, the sub patterns will be added to an existing set, if the correlation value is not high enough the sub-pattern will be learnt as new to the network.

18. A method according to claim 17 in which the training algorithm decides, for each active neuron, which connection will provide the best route to the target output neuron, the algorithm first determines if there are sufficient neurons in the current layer that can map together to perform the required function, the mapping function decides which next layer neuron will provide the best route to the target output neuron, if a feature cannot be mapped, routing of individual neuron activity as interconnects ensures that, in the subsequent layer, the neurons will form a unique feature for the class of pattern being trained.

19. A method according to claim 18 in which mapping is constrained by requiring that a number of active neurons are present in the penultimate layer to address the output target neuron thereby preventing pattern convergence occurring too quickly in the layers to reduce data compression, each neuron is allocated a significance value defining the level of information flowing through it, a neuron with a high significance will be prevented from mapping at an early stage to maintain a relatively equal share of information among the neurons in a given layer, similarly, a neuron with a particularly low significance will be forced to map into other neurons.

20. A method according to claim 19 in which the definition of high and low significance increases with network depth and is scaled by the level of activity in the input layer.

21. A method according to claim 20 in which a correlation value is used to determine weight page updates, if the current pattern does not match those already learnt by a particular neuron then a new page of weights is generated, if the correlation value is between the match and no match thresholds then a new page of weights is merged with the best existing weight page, if the correlation value is above the match threshold no weight update is required and the next layer neuron is activated.

22. A digital neural network according to claims 5 to 10 and programmed employing a training algorithm as claimed in any of claims 11 to 19.

# FIG.1

NDO

SA

NI8

NIO

DWLO 1

MC1

AD

DWLO 512

MC5I2

PCS

A0  A8

TAC

PC

NFSI

# FIG. 2

# FIG. 3

# FIG.2A

NX1
NX2
NX3
NX4

# FIG.16

X1
Weight
Threshold
X2
X3

FIG.4

EP 0 560 595 A2

## FIG. 5

ICWP

| X1 | X2 | X3 | THRESHOLD | FIRE |
|----|----|----|-----------|------|
| 0 | 0 | 0 | | |
| 0 | 0 | 1 | | |
| 0 | 1 | 0 | | |
| 0 | 1 | 1 | | |
| 1 | | | | |
| 1 | 0 | 0 | 1 | yes |
| 1 | 0 | 1 | | |
| 1 | 1 | 0 | | |
| 1 | 1 | 1 | | |

NXWP

| X1 | X2 | X3 | THRESHOLD | FIRE |
|----|----|----|-----------|------|
| 0 | 0 | 0 | | |
| 0 | 0 | 1 | | |
| 0 | 1 | 0 | | |
| 0 | 1 | 1 | | |
| 1 | 0 | 0 | | |
| 1 | | 2 | | |
| 1 | 0 | 1 | 3 | yes |
| 1 | 1 | 0 | | |
| 1 | 1 | 1 | | |

| *A | B | C | D |
|----|---|---|---|
| 1 | 0 | 0 | 1 |
| 0 | 1 | 1 | 1 |
| 0 | 1 | 0 | 1 |
| 1 | 0 | 1 | 0 |
| 1 | 0 | 0 | 0 |
| 0 | 1 | 1 | 0 |
| 0 | 1 | 0 | 1 |

## FIG.6

ICWP

| X1 | X2 | X3 | THRESHOLD | FIRE |
|----|----|----|-----------|------|
| 0 | 0 | 0 | | |
| 0 | 0 | 1 | | |
| 0 | 1 | 0 | | |
| 0 | 1 | 1 | | |
| 1 | | | | |
| 1 | 0 | 0 | 1 | yes |
| 1 | 0 | 1 | | |
| 1 | 1 | 0 | | |
| 1 | 1 | 1 | | |

NXWP

| X1 | X2 | X3 | THRESHOLD | FIRE |
|----|----|----|-----------|------|
| 0 | 0 | 0 | | |
| 0 | 0 | 1 | | |
| 0 | 1 | 0 | | |
| 0 | 1 | 1 | | |
| 1 | 0 | 0 | | |
| 1 | | 2 | | |
| 1 | 0 | 1 | 3 | yes |
| 1 | 1 | 0 | | |
| 1 | 1 | 1 | | |

| A | B* | C | D |
|---|----|---|---|
| 1 | 0 | 0 | 1 |
| 0 | 1 | 1 | 1 |
| 0 | 1 | 0 | 1 |
| 1 | 0 | 1 | 0 |
| 1 | 0 | 0 | 0 |
| 0 | 1 | 1 | 0 |
| 0 | 1 | 0 | 1 |

NI1

N2H1

N2H3

NXB

FIG. 7

# FIG.8

**ICWP table:**

| X1 | X2 | X3 | THRESHOLD | FIRE |
|----|----|----|-----------|------|
| 0 | 0 | 0 | | |
| 0 | 0 | 1 | | |
| 0 | 1 | 0 | 1 | yes |
| 0 | 1 | 1 | | |
| 1 | 0 | 0 | 1 | yes |
| 1 | 0 | 1 | | |
| 1 | 1 | 0 | | |
| 1 | 1 | 1 | | |

**NXWP table:**

| X1 | X2 | X3 | THRESHOLD | FIRE |
|----|----|----|-----------|------|
| 0 | 0 | 0 | | |
| 0 | 0 | 1 | | |
| 0 | 1 | 0 | | |
| 0 | 1 | 1 | | |
| 1 | 0 | 0 | | |
| 1 | 0 | 1 | 3 | yes |
| 1 | 1 | 0 | | |
| 1 | 1 | 1 | | |
| 1 | 1 | 1 | 3 | yes |

**Input table:**

| A | B | C | D |
|---|---|---|---|
| 1 | 0 | 0 | 1 |
| 0 | 1 | 1 | 1 |
| 0 | 1 | 0 | 1 |
| 1 | 0 | 1 | 0 |
| 1 | 0 | 0 | 0 |
| 0 | 1 | 1 | 0 |
| 0 | 1 | 0 | 1 |

NXD

N2H3

N1H5

# FIG. 9

FIG.10

I/O P.D

CC

PR

RC

NCL

NCR

PI

FIG.13

DS

DS

DS

DS

FIG.14

DS

DS

DS

DS

DS

DS

EP 0 560 595 A2

# FIG.11

NCL

NCR

RC

# FIG.12

SRAM

Build Table of allowed fan out points — TAL1

Determine InumInc and SigValInc — TAL2

$$InumInc = \frac{Target\_Parameter - in\_numin}{DEPTH}$$

$$Sval\_Max = MaxSigVal - 1 \qquad SigValInc = \frac{Sval\_Max - Sval\_Min}{DEPTH}$$

Select First Layer (Layer = 0) — TAL3

Determine SigVal and in_num — TAL4

$$SigVal = Sval\_Min + (SigValInc * Layer)$$

$$in\_num = in\_numin + (InumInc * Layer)$$

TRAIN LAYER — TAL5, FIG.17/18

MEMORY ALLOCATION — TAL6

RECALL Layer — TAL7

Increment Layer — TAL9

*FIG.15*
(1/2)

EP 0 560 595 A2

*FIG.15* (2/2)

Penultimate Layer? — TAL8 — No

Yes

RECALL Last Layer — TAL10

Get Corr_Val =CORRNUM for Target Output Neuron — TAL11

UPDATE — TAL12

RIPPLE Last Layer Significance — TAL13

MEMORY ALLOCATION — TAL14

RECALL Last Layer — TAL15

CHECK CONNECTIONS — TAL16

END — TAL

# FIG.17

RECALL Next Layer —TL1

Calculate No. of possible inputs to each Neuron in next Layer

Select first Neuron in Current Layer    TL3    TL2

Tag Firing Neurons in Next Layer as Function or Interconnect

Select First Function Neuron —TL4    TL5

Is Current neuron Connected to Firing Function Neuron?

NO    NO    YES

Is Corr_Val > Weak_Fire_Val? —TL6

TL7— MAP    YES    Get Next Function Neuron

YES    Was MAP Successful?    TL8

NO

Last Firing Function Neuron?    NO

—TL11

YES

Select First Interconnect Neuron    —TL12    TL13

Is Current Neuron connected to Firing Interconnect Neuron?

NO    Is Corr_Val > Weak_Fire_Val?    YES

YES    NO    TL14    Get Next Interconnect Neuron

TL15—INTERCONNECT

Last Firing Interconnect Neuron?    NO    TL17

TL16

Is Pattern Class New?    YES    Get Next Current Layer neuron

YES    NO    UNIQUE MAP    TL18

TL19    TL10

Last Neuron?    NO

TL9    YES

Stage 2    —TL20    TLS1

34

## FIG.18

Select First Unmapped Current Layer Neuron — TL21

YES — Is Pattern Class New OR Sig>MaxNoise? — TL22

NO

Is Adjacent Next Layer Neuron Firing? — TL23

NO

YES

TL24

Mark as Mapped and Ignore

Is Pattern Class New? — YES

TL25

NO

UNIQUE MAP — TL26

TL27

Was UNIQUE MAP Successful? — YES

NO

Is Sig> MaxSigVal? — TL28

NO

YES

INTERCONNECT — TL29

Is Sig<Sig_Val? — TL30

NO

YES

LOOK AROUND with in_num=2 — TL31

TL32

LOOK AROUND with in_num

Get Next Unmapped Neuron

TL34

Last Unmapped Current Layer Neuron? — NO

TL33

YES — TLS2

RIPPLE Significance — TL35

END

# FIG. 19

GUIDE — IP1

Was GUIDE Successful? — IP2

NO

YES

Set Required Array Parameters — IP3

Get Corr_Val=CORRNUM for Connection — IP4

UPDATE — IP5

Report 'Failed To Map' — IP6

Mark As Mapped — IP7

IP

END

# FIG. 20

```
┌─────────────────────────────────────┐
│  Define Mapping for Current Neuron   │ ── MP1
└─────────────────────────────────────┘
                  │
                  ▼
┌─────────────────────────────────────┐
│  RECORD CONNECTIONS of other Neurons │ ── MP2
└─────────────────────────────────────┘
                  │
                  ▼
         Were sufficient Neurons          MP3        NO
         Mapped Together?                          ──────┐
                  │                                      │
                 YES                                     │
                  ▼                                      │
┌─────────────────────────────────────┐                 │
│  Reset No. of possible inputs to other│ ── MP4         │
│  Next Layer Neurons                  │                 │
└─────────────────────────────────────┘                 │
                  │                                      │
                  ▼                                      │
┌─────────────────────────────────────┐                 │
│  Set Required Array Parameters       │ ── MP5          │
└─────────────────────────────────────┘                 │
                  │                                      │
                  ▼                                      │
         ┌──────────────┐                                │
         │   UPDATE      │ ── MP6                         │
         └──────────────┘                                │
                  │                                      │
                  ▼                                      │
┌─────────────────────────────────────┐ ◄───────────────┘
│  Undefine Current Neuron Mapping     │ ── MP7
└─────────────────────────────────────┘
                  │
                  ▼
         Called from LOOK AROUND?           NO
                  │                        ──────┐
                 YES                              │
                  ▼                               │
         ┌──────────────┐                         │
         │ INTERCONNECT  │ ── MP9                  │
         └──────────────┘                         │
                  │                               │
                  ▼◄──────────────────────────────┘
                 END            MP
```

# *FIG.21*

## FIG.22

```
┌─────────────────────────────────────┐
│  Find Next Layer Neuron with        │
│  Largest Number of Available Inputs  │── LAP1
└─────────────────────────────────────┘
                    │
                    ▼
              LAP2
         Are there Enough Inputs          YES
          for the Mapping Function?  ─────────
                    │
                   NO
                    │
         ┌──────────┴──────────┐
         │                     │
       LAP6                  LAP3
    Does in_num=2?        ┌──────────┐
  YES            NO       │ CORRELATE│
                          └──────────┘
                              │
                            LAP4
                          Successful?
                     NO  ◄────────
                                │
                               YES
                                │
┌───────────┐  ┌──────────────┐  ┌──────┐
│FORCE MAP  │  │ INTERCONNECT │  │ MAP  │
└───────────┘  └──────────────┘  └──────┘
   LAP7           LAP8              LAP5

              LAP
                │
                ▼
               END
```

Get Significance of Unmapped
Current Layer Neurons — FMP1

Sort into Order, Least
Significant, non-zero First — FMP2

*FIG.23*

NO

Is Least Significant non-zero? — FMP3

YES

Get Available Map Points
for Current Neuron — FMP4

FMP5
Get Available Map Points
for Least Significant Neuron

Get Overlap Map Points
FMP6

CORRELATE — FMP7

NO

CORRELATE Successful?
FMP8

YES

FMP9 — MAP

YES

MAP Successful?
FMP10

NO

FMP11 — RIPPLE Significance

Get Significance of
Next Layer Neurons — FMP12

Sort into Order, Least
Significant, non-zero First — FMP13

FMP14 — MAP IN FORCE NEURON

FMP

END

# FIG. 24

MIFNP1 — Is Sig>0?  NO

YES  MIFNP2

Is Total Sig of Neuron plus
this Mapping < MaxSigVal?  NO

YES

Set Required Array Parameters
for this Mapping

MIFNP3

Get Corr_Val = CORRNUM
for this Mapping

MIFNP4

UPDATE — MINFP5

MINFP

END

# FIG. 25

Get Significance of this
Layer Adjacent Neurons

RCP1

Sort into Order, Least
Significant, non-zero First

RCP2

MAP IN ORDER

RCP3

Return No. Mapped

RCP

RCP4

## FIG.26

```
                                                    MIOP1
  ┌─────────────────────────────────────┐
  │ Select Least Significant non-zero    │
  │ Neuron Available for Mapping         │
  └─────────────────────────────────────┘
                     │  MIOP2
                     ▼
           ┌──────────────────┐
           │  MAP CONNECTION  │◄──────────────────────┐
           └──────────────────┘                       │
                     │                                 │
      NO             ▼                                 │
        ◄─── Was MAP CONNECTION                ┌──────────────────┐
             Successful?                       │ Get Next Neuron  │
                     │    MIOP3                 └──────────────────┘
   MIOP4            YES              MIOP6         ▲
     │               ▼                             │
  ┌──────────────────────────────┐                │
  │ Increment No. of Connections │                │
  └──────────────────────────────┘                │
                     │                      NO     │
                     ▼                             │
        ◄─── Last Available Neuron? ──────────────►
                     │
                     │ MIOP5
                   YES
                     │    MIOP
                     ▼
           Return No. Mapped
```

## FIG.27

```
                    Is Proposed Function Neuron
  NO    MCP1        Firing AND Corr_Val>Fire_Val?
                              │ YES
     MCP2                     ▼                        NO
        ◄─── Does Connection Already Exist? ─────────────►
                              │ YES
     MCP3                     ▼
        ◄─── Is Total Significance of Function Neuron     NO
             plus this Mapping < MaxSigVal? ─────────────►
                              │ YES
     MCP4                     ▼                        YES
        ◄─── Was Mapping Defined by MAP? ──────────────►
                              │ NO
                              ▼
           ┌──────────────────────────────┐
           │ Set required Array Parameters │  MCP5
           │      for this Mapping         │
           └──────────────────────────────┘
                              │
                              ▼
           ┌──────────────────────────────┐
           │ Reset No. of Possible Inputs to│ MCP6
           │    other Next Layer Neurons    │
           └──────────────────────────────┘
                              │
                              ▼
           Return Success        MCP      Return Failure
```

# FIG. 28

UP1

Is Neuron Firing AND
Corr_Val > Fire_Val?   YES

NO

NO   UP2

Is Corr_Val > Weak_Fire_Val?

YES

UP3   MERGE WEIGHTS

UP4   GEN NEW WEIGHTS

UP5

Update Map Array

UP

END

# FIG. 29

Tag Available Connection Points — GP1

Get_Best_Node — GP2

NO — Is this already defined as a Function or Interconnect Neuron? — GP3

YES

NO — Is this a new Pattern Class? — GP4

YES

Trying to Interconnect to a Function Neuron? — GP5 — YES

NO — GP6

Trying to Map to an Interconnect Neuron? — YES

NO

YES — Is Best_Node already Connected to the Current Neuron? — GP7

NO

GP8 — Is Best_Node Connected Directly to the Target Output Neuron? — NO

YES

YES — Is Significance > MaxSigVal AND Neuron Not Firing AND Neuron Not Already Mapped During This training? — GP9

NO

Mark Best_Node as Unavailable — GP10

GP11 — Last Available Neuron? — NO — Get Next Best_Node — GP12

YES

Can Neuron be Forced into a Function or Interconnect Neuron Learnt during this Training? — GP13

Return Success — GPS

GP

Return Failure — GPF

## FIG. 30

Select First Adjacent Next layer Neuron — CP1

Is it Available? — CP2 — NO

YES

Is Sig<MaxSigVal? — CP3 — NO

YES

Increment No. Available — CP4

Get Next Available Neuron — CP6

Last Adjacent Next Layer Neuron? — CP5 — NO

YES

Is No. Available ≥ 0? — CP7 — NO

YES

Get Best Corr_Val — CP8

Does Corr_Val Indicate Equality? — CP9 — YES

NO

Is Corr_Val > Min_Corr? — CP10 — YES

NO

Tag Neurons with Corr_Val = 0 — CP11

Return Failure — RF

Is there Equality? — CP12 — NO

YES

GUIDE — CP13

Return Corr_Val — RCV

CP

## FIG. 31

Select First Weight Page — CMP1

Select First Possible Fan-to Neuron — CMP2

CMP3
Get Weight and Significance

NO — Weight>0? — CMP4
↓YES

CMP4
$$T1+ = Weight \ (W)$$
$$T2+ = Significance \ (S)$$
$$T3+ = (WS)^{0.5}$$

Significance>0? — NO
CMP5 ↓YES

CMP6
$$T1+ = Weight \ (W)$$
$$T3- = [ \ (0-W)*S \ ]^{0.5}$$

Get Next Neuron — CMP8

CMP13
Get Next Weight Page

CMP7
Last Fan-to Neuron? — NO
↓YES

NO — T1>0 AND T2>0 AND T3>0? — YES
CMP9

corr_val[Page] = 0 — CMP11

CMP10

CMP10
$$corr\_val[Page] = \frac{T3^{2}}{T1 \cdot T2}$$

CMP12
Last Weight Page? — NO
↓YES

Find Best corr_val — CMP14

Return Best corr_val

CMP

# FIG. 32

```
          ┌─────────────┐
          │ GEN WEIGHTS │──GNWP1
          └─────────────┘
                 │
                 ▼
YES         ╱ Re-using Neuron? ╲──GNWP2
   ◄────────╲                  ╱
                 │ NO
                 ▼
                                    GNWP3
        ╱ Empty Weight Page Available? ╲
        ╲                              ╱
            │ YES              │ NO
            ▼
   ┌──────────────────────┐
   │ Get Next Empty Weight│
   │ Page from USE array  │──GNWP4
   └──────────────────────┘
            │
            ▼
      ┌──────────────────┐ GNWP5
      │ Update Use array │
      └──────────────────┘
                              ┌──────────────────────────────┐
   GNWP6                      │ Report 'No More weight Pages' │
   ┌──────────────────┐       └──────────────────────────────┘
   │ Get Last Used Weight │        GNWP8
   │ Page from Use array  │
   └──────────────────┘
            │
            ▼
   ┌──────────────────┐
   │ WEIGHT ALLOCATION │──GNWP7
   └──────────────────┘
            │
            ▼
          END ◄───────────
                        GNWP
```

47

# FIG. 33 (1/3)

GWP3 — inhib=inhib_rest ← NO — Layer=0? (GWP1) — YES — GWP2 — inhib=inhib_zero

GWP4 — Select first Fan-to Neuron

GWP5 — Mapped AND Connected? — YES / NO

YES: Weight (neuron) = significance^power_parameter  (GWP6)
pos_weight_sum+ = weight(neuron)
No. Pos Inputs++

GWP7 — Last Fan-to Neuron? — NO — GWP8 — Get Next Fan-to Neuron

YES — GWP9 — Select first Fan-to Neuron

GWP10 — Not Mapped AND Not Firing? — YES / NO

YES: Weight (neuron) = -1  (GWP11)
No. Neg Inputs++

NO — GWP12 — Last Fan-to Neuron? — NO — GWP13 — Get Next Fan-to Neuron

YES — GWP14 — Select first Fan-to Neuron

EP 0 560 595 A2

EP 0 560 595 A2

GWP15

Mapped AND Not Connected
OR
Not Mapped AND Firing?

YES

Weight (neuron) = 0
No. Inactive Inputs ++ — GWP16

NO

Last Fan-to Neuron? — GWP17

NO

Get Next
Fan-to Neuron — GWP18

YES

GWP19

No. Neg Inputs > 0?

YES

GWP20

$$neg\_weight = \frac{pos\_weight\_sum * inhib * -1}{(No.\,Pos\,Inputs)^{toll\ power}}$$

GWP21

No. Inactive Inputs > 0?

NO

YES

GWP22

$$inactive\_weight = \frac{pos\_weight\_sum * inactive\_parameter}{No.\ Inactive\ Inputs}$$

GWP23

Select first Fan-to Neuron

*FIG. 33* (2/3)

FIG.33 (3/3)

GWP24: Weight[neuron]=-1? — YES → GWP25: Weight(neuron) = neg_weight — NO

GWP26: Weight[neuron]≡0? — YES → GWP27: Weight(neuron) = inactive_weight — NO

GWP28: Last Fan-to Neuron? — NO → GWP29: Get Next Fan-to Neuron — YES

GWP30: NORMALISE

GWP31: threshold = pos_weight_sum * weight_parameter

END — GWP

EP 0 560 595 A2

FIG. 34

EP 0 560 595 A2

*FIG.35* (1/2)

GEN WEIGHTS — MWP1

Get Best Weight Page — MWP2

Select First Fan-to Neuron — MWP3

MWP4

$$Var1 = \left[\, (\, BestWeight[neuron] * Weight[neuron] * rate \,)^2 \,\right]^{1/2}$$

$$Var2 = \left[\, \left[\, \frac{BestWeight[neuron] * rate}{Weight[neuron]} \,\right]^2 \,\right]^{1/2}$$

MWP5

BestWeight[neuron] > 0?

YES / NO

MWP6 — Weight[neuron] < 0?

MWP7 — Weight[neuron] > 0?

NO / YES (MWP6)
NO / YES (MWP7)

MWP8 — BestWeight[neuron] + = Var1 + adjust

MWP10 — BestWeight[neuron] - = Var1 - adjust

MWP9 — BestWeight[neuron] - = Var2 - adjust

MWP11 — BestWeight[neuron] + = Var2 + adjust

MWP12

Last Fan-to Neuron? — NO → Get Next Fan-to Neuron — MWP13

YES

*FIG. 35* (2/2)

WEIGHT ALLOCATION — MWP14

Clear Net Array for Current Neuron — MWP15

Select First Weight Page — MWP16

MWP

MEMORY ALLOCATION — MWP17

Last Used Weight Page? — NO → Get Next Weight Page — MWP19

MWP18

YES
END

# FIG. 36

Get Weights and Threshold from strorage

MAP1

Address = 0 — MAP2

Bit = 1 — MAP3

NO — Corresponding Neuron Firing? — MAP4

YES

Activation+ = Weight[neuron] — MAP5

MAP6

Last Bit? — NO — Increment Bit — MAP7

YES

NO — Activation>threshold? — MAP8

YES

Set position in NET array to WeightPage * 10 — MAP9

MAP10

NO — Activation * page_parameter > threshold AND Position in NET array = 0?

YES

Set position in NET array to WeightPage * -1 — MAP11

MAP13

Increment Address

MAP12

Last Address? — NO

YES

END

MAP

## FIG. 37

Select First Neuron in Layer ⎯ RLP1

Calculate Address from Firing Fan-to Neurons ⎯ RLP2

Get Contents of NET array at Neuron Location and Address ⎯ RLP3

RLP4

NET contents > 0? — YES

RLP10 ⎯ Get Next Neuron

NO

RLP5

RESULT[neuron] = 2

RLP6

NET contents < 0? — YES

NO

RLP7

RESULT[neuron] = -1

RESULT[neuron] = 0 ⎯ RLP8

RLP9

Last Neuron? — NO

YES

RLP

END